(19) **Europäisches Patentamt / European Patent Office / Office européen des brevets**

(11) **EP 4 099 124 B1**

(12) **EUROPEAN PATENT SPECIFICATION**

(45) Date of publication and mention
of the grant of the patent:
**23.04.2025 Bulletin 2025/17**

(21) Application number: **22174426.1**

(22) Date of filing: **19.05.2022**

(51) International Patent Classification (IPC):
*G05D 1/00* *(2024.01)*

(52) Cooperative Patent Classification (CPC):
**G05D 1/0212; A01B 69/008**

(54) **AUTOMATIC TRAVELING METHOD, AUTOMATIC TRAVELING SYSTEM, AND AUTOMATIC TRAVELING PROGRAM**

AUTOMATISCHES FAHRVERFAHREN, AUTOMATISCHES FAHRSYSTEM UND AUTOMATISCHES FAHRPROGRAMM

PROCÉDÉ, SYSTÈME ET PROGRAMME DE DÉPLACEMENT AUTOMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2021 JP 2021091527**

(43) Date of publication of application:
**07.12.2022 Bulletin 2022/49**

(73) Proprietor: **Yanmar Holdings Co., Ltd.**
**Osaka-shi, Osaka (JP)**

(72) Inventors:
• **SUZUKI, Akihiro**
**Osaka (JP)**
• **KUDO, Junko**
**Osaka (JP)**

(74) Representative: **Novagraaf International SA**
**Chemin de l'Echo 3**
**1213 Onex, Geneva (CH)**

(56) References cited:
**WO-A1-2021/100373    CN-A- 112 356 844**

**Description**

TECHNICAL FIELD

The present invention relates to an automatic traveling method, an automatic traveling system, and an automatic traveling program, for causing a work vehicle to automatically travel according to a target route in a work area.

BACKGROUND ART

There is known a work vehicle automatically traveling on a target route while spraying a chemical liquid on crops planted in a work area such as a farm field or an agricultural farm (see, for example, Patent Document 1). The work vehicle sprays the chemical liquid in a left-right direction within a work route while automatically traveling sequentially on a plurality of work routes where the crops are planted. Document CN112356844A relates to the field of vehicle control, and in particular to a method, device, and equipment for controlling the driving direction of a vehicle.

PRIOR ART DOCUMENT

PATENT DOCUMENT

Patent Document 1: Japanese Unexamined Patent Application Publication No. 2021-000021

SUMMARY OF INVENTION

TECHNICAL PROBLEM

The work vehicle includes a function of performing a correction operation for correcting a position of the work vehicle or an orientation thereof if a position deviation (deviation in position) or an orientation deviation (deviation in orientation) with respect to the target route exceeds a threshold value (allowable value) to avoid collision against crops during automatic travel. Therefore, for example, in a case where a condition of a farm field is not good and in a case where the farm field is sloped, as a result of the position deviation or the orientation deviation frequently exceeding the threshold value, the correction operation is repeatedly executed. This causes a problem that the work efficiency of a work with the work vehicle is reduced.

An object of the present invention relates to an automatic traveling method, an automatic traveling system, and an automatic traveling program, by which it is possible to improve work efficiency of a work performed by a work vehicle traveling automatically.

SOLUTION TO PROBLEM

The present invention is defined in claims 1, 11 and 12 and relates to an automatic traveling method according includes causing a work vehicle to automatically travel according to a target route in a work area where crops are planted, changeably setting, with respect to the target route, a threshold value of a deviation including at least one of a position deviation and an orientation deviation of the work vehicle, and causing the work vehicle to execute a correction operation for correcting the deviation if the deviation exceeds the threshold value, to avoid collision against the crops during automatic travelling.

An automatic traveling system according to the present invention includes a travel processing unit, a setting processing unit, and a correction processing unit. The travel processing unit causes the work vehicle to automatically travel according to a target route in a work area where crops are planted. The setting processing unit changeably sets, with respect to the target route, a threshold value of a deviation including at least one of the position deviation and the orientation deviation of the work vehicle. The correction processing unit executes a correction operation for correcting the deviation of the work vehicle if the deviation exceeds the threshold value, to avoid collision against the crops during automatic travelling.

An automatic traveling program according to the present invention is a program for causing one or more processors to execute causing a work vehicle to automatically travel according to a target route in a work area where crops are planted, changeably setting, with respect to the target route, a threshold value of a deviation including at least one of a position deviation and an orientation deviation of the work vehicle, and causing the work vehicle to execute a correction operation for correcting the deviation if the deviation exceeds the threshold value, to avoid collision against the crops during automatic travelling.

ADVANTAGEOUS EFFECT OF INVENTION

According to the present invention, it is possible to provide an automatic traveling method, an automatic traveling system, and an automatic traveling program, by which a work vehicle traveling automatically can improve work efficiency of a work.

BRIEF DESCRIPTION OF DRAWINGS

FIG. 1 is a schematic diagram illustrating an entire configuration of an automatic traveling system according to an embodiment of the present invention.
FIG. 2 is a block diagram illustrating a configuration of the automatic traveling system according to the embodiment of the present invention.
FIG. 3 is an external view obtained when a work vehicle according to the embodiment of the present invention is viewed from a left front side.
FIG. 4A is an external view of a left side face obtained when the work vehicle according to the embodiment of the present invention is viewed from a left side.
FIG. 4B is an external view of a right side face obtained when the work vehicle according to the embodiment of the present invention is viewed from a right side.
FIG. 4C is an external view of a rear face obtained when the work vehicle according to the embodiment of the present invention is viewed from a rear face side.
FIG. 5 is a diagram illustrating an example of a crop row according to the embodiment of the present invention.
FIG. 6 is a diagram illustrating an example of a target route according to the embodiment of the present invention.
FIG. 7A is a diagram for explaining a method of generating a target route according to the embodiment of the present invention.
FIG. 7B is a diagram for explaining a method of generating a target route according to the embodiment of the present invention.
FIG. 8 is a diagram illustrating a travel route of the work vehicle according to the embodiment of the present invention.
FIG. 9 is a diagram illustrating an example of a position deviation and an orientation deviation of the work vehicle according to the embodiment of the present invention.
FIG. 10A is a table showing an example of position deviation information utilized in an automatic traveling system according to the embodiment of the present invention.
FIG. 10B is a table showing an example of orientation deviation information utilized in the automatic traveling system according to the embodiment of the present invention.
FIG. 11A is a table showing an example of position correction information utilized in the automatic traveling system according to the embodiment of the present invention.
FIG. 11B is a table showing an example of orientation correction information utilized in the automatic traveling system according to the embodiment of the present invention.
FIG. 12 is a flowchart illustrating an example of a procedure of a threshold value setting process executed by the automatic traveling system according to the embodiment of the present invention.
FIG. 13 is a flowchart illustrating an example of a procedure of an automatic traveling process executed by the automatic traveling system according to the embodiment of the present invention.
FIG. 14 is a diagram illustrating an example of a farm field according to a reference embodiment of the present invention.
FIG. 15 is a diagram illustrating an example of a travel route of the work vehicle according to the reference embodiment of the present invention.
FIG. 16 is a diagram illustrating an example of a target route of the work vehicle according to the reference embodiment of the present invention.

DESCRIPTION OF EMBODIMENTS

The following embodiment is an example in which the present invention is embodied, and does not limit the technical scope of the present invention defined in the claims.

[Automatic Traveling System 1]

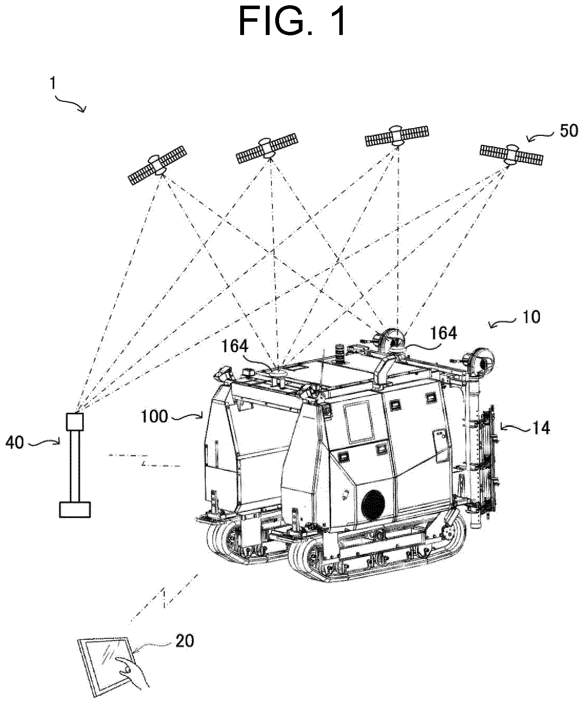

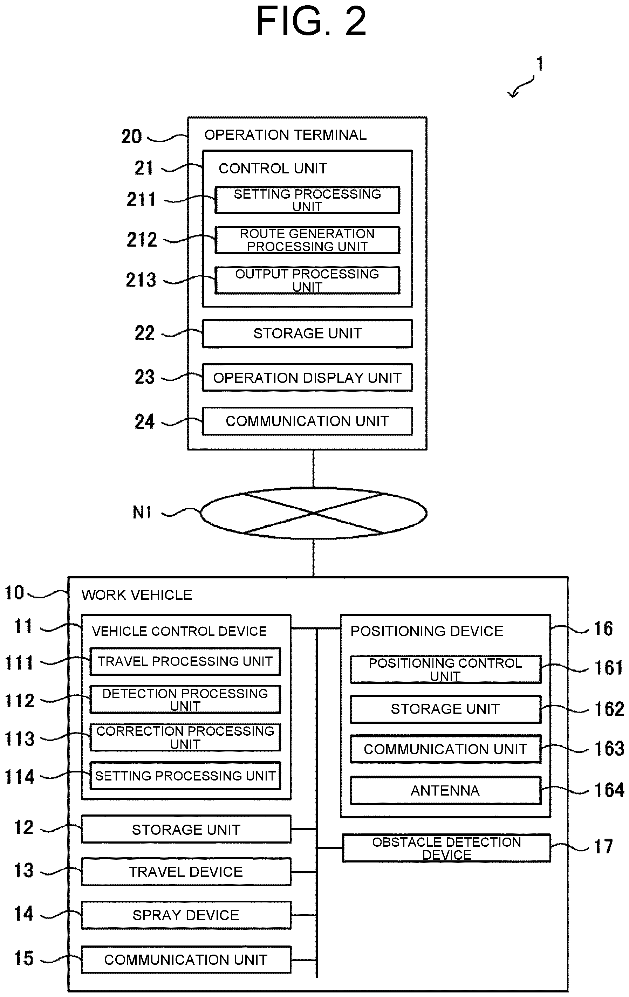

As illustrated in FIGS. 1 and 2, an automatic traveling system 1 according to the embodiment of the present invention includes a work vehicle 10, an operation terminal 20, a base station 40, and a satellite 50. The work vehicle 10 and the operation terminal 20 can communicate with each other via a communication network N1. For example, the work vehicle 10 and the operation terminal 20 can communicate via a mobile phone line network, a packet line network, or a wireless LAN.

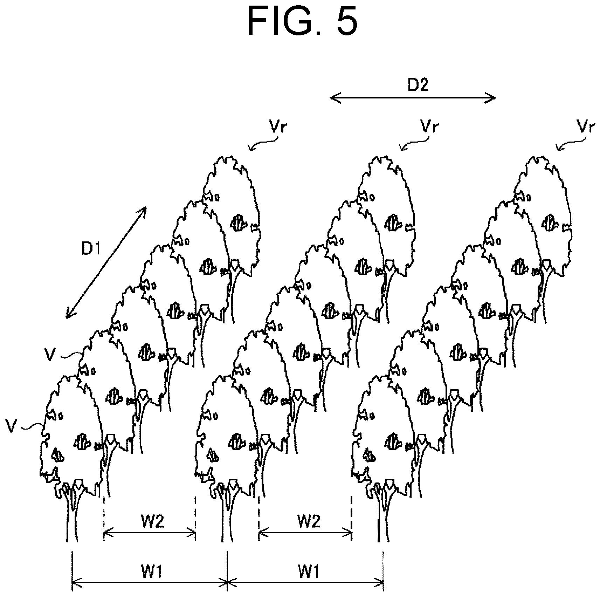

In the present embodiment, a case where the work vehicle 10 is a vehicle that performs a spraying work of spraying a chemical liquid, water, or the like on crops V (see FIG. 5) planted in a farm field F will be described as an example. The farm field F is an example of a work area in the present invention, and the farm field F is, for example, an orchard such as a vineyard or an apple orchard. The crops V are, for example, grape trees. The spraying work is, for example, a work for spraying a spraying material such as a chemical liquid or water on the crops V. As another embodiment, the work vehicle 10 may be a vehicle for performing a weeding work, a vehicle for performing a leaf cutting work, or a vehicle for performing a harvesting work.

The crops V are arranged in a plurality of rows at predetermined intervals in the farm field F. Specifically, as illustrated in FIG. 5, a plurality of the crops V are planted linearly in a predetermined direction (a D1 direction), and form a crop row Vr including the plurality of crops V arranged linearly. FIG. 5 illustrates three of the crop rows Vr. The crop rows Vr are arranged at a predetermined interval W1 in the row direction (a D2 direction). A region (space) having an interval W2 between adjacent ones of the crop rows Vr is a work passage where the work vehicle 10 performs a spraying work on the crops V while traveling in the D1 direction. The crop row Vr is an example of a row of targets to be sprayed according to the present invention.

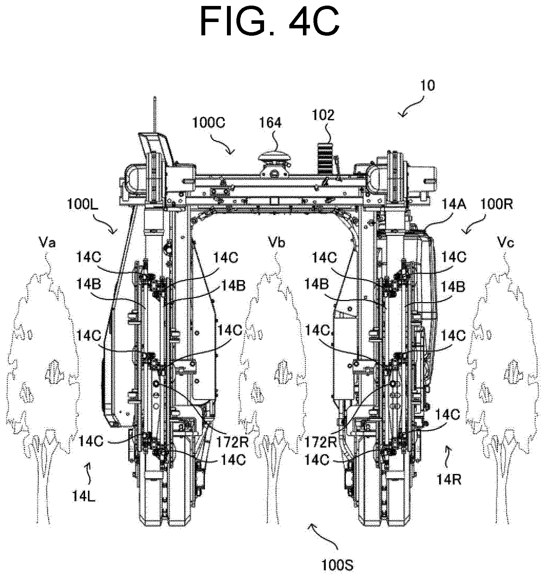

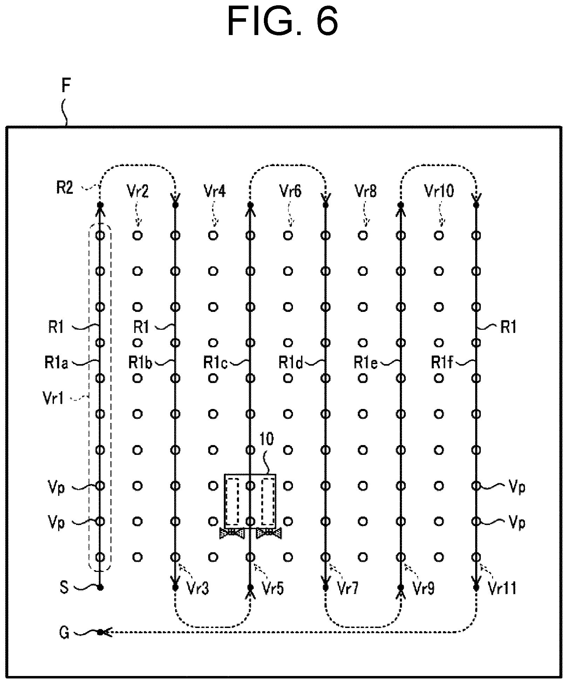

The work vehicle 10 is capable of traveling automatically (autonomously traveling) along a target route R set in advance. For example, as illustrated in FIG. 6, the work vehicle 10 automatically travels from a work start position S to a work end position G along the target route R including a work route R1 (work routes R1a to R1f) and a movement route R2. The work route R1 is a linear route on which the work vehicle 10 performs the spraying work on the crops V, and the movement route R2 is a route on which the work vehicle 10 moves between the crop rows Vr without performing the spraying work. The movement route R2 includes, for example, a turning route and a straight route. In the example illustrated in FIG. 6, the crops V forming crop rows Vr1 to Vr11 are arranged in the farm field F. In FIG. 6, positions (crop positions) where the crops V are planted are represented by "Vp". The work vehicle 10 traveling in the farm field F of FIG. 6 includes a vehicle body 100 having an inverted U-shape (see FIG. 4C), and while traveling in a state of spanning over one of the crop rows Vr, the work vehicle 10 sprays a chemical liquid on the crops V in the one crop row Vr and on the crop row Vr adjacent to the one crop row Vr. For example, as illustrated in FIG. 6, if the work vehicle 10 travels in a state of spanning over the crop row Vr5, a left-side vehicle body (a left-side part 100L) of the work vehicle 10 travels on a work passage between the crop rows Vr4 and Vr5, a right-side vehicle body (a right-side part 100R) of the work vehicle 10 travels on a work passage between the crop rows Vr5 and Vr6, and the work vehicle 10 sprays a chemical liquid on the crops V of the crop rows Vr4, Vr5, and Vr6.

The work vehicle 10 automatically travels in a predetermined row order. For example, the work vehicle 10 firstly travels across the crop row Vr1, next, travels across the crop row Vr3, and next, travels across the crop row Vr5. Thus, the work vehicle 10 automatically travels according to a preset order of the crop rows Vr. The work vehicle 10 may travel on each row in the order of arrangement of the crop rows Vr, or may travel in each of plurality of rows.

The satellite 50 is a positioning satellite configuring a satellite positioning system such as a global navigation satellite system (GNSS), and transmits a GNSS signal (satellite signal). The base station 40 is a reference point (reference station) configuring the satellite positioning system. The base station 40 transmits, to the work vehicle 10, correction information for calculating a current position of the work vehicle 10.

A positioning device 16 mounted in the work vehicle 10 executes a positioning process for calculating a current position (a latitude, a longitude, and an altitude), a current orientation, and the like of the work vehicle 10 by utilizing the GNSS signal transmitted from the satellite 50. Specifically, the positioning device 16 positions the work vehicle 10 by utilizing a real time kinetic (RTK) method or the like for positioning the work vehicle 10, based on positioning information (such as a GNSS signal) received by two receivers (an antenna 164 and the base station 40) and correction information generated by the base station 40. The positioning method is a well-known technique, and thus, detailed description thereof will be omitted.

Each constituent components configuring the automatic traveling system 1 will be described in detail below.

[Work Vehicle 10]

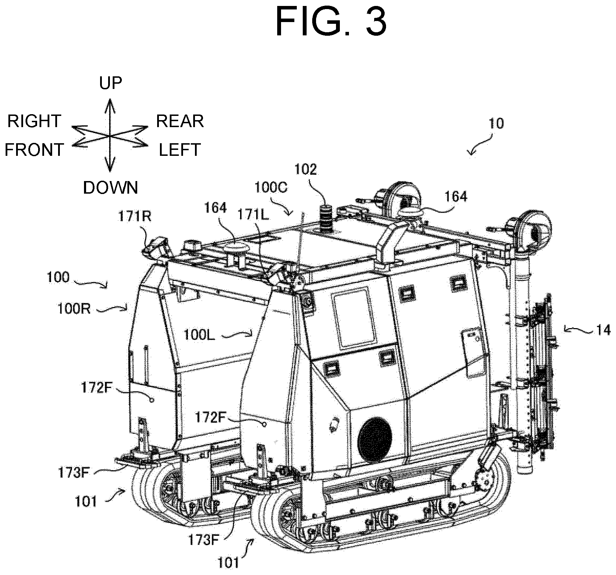

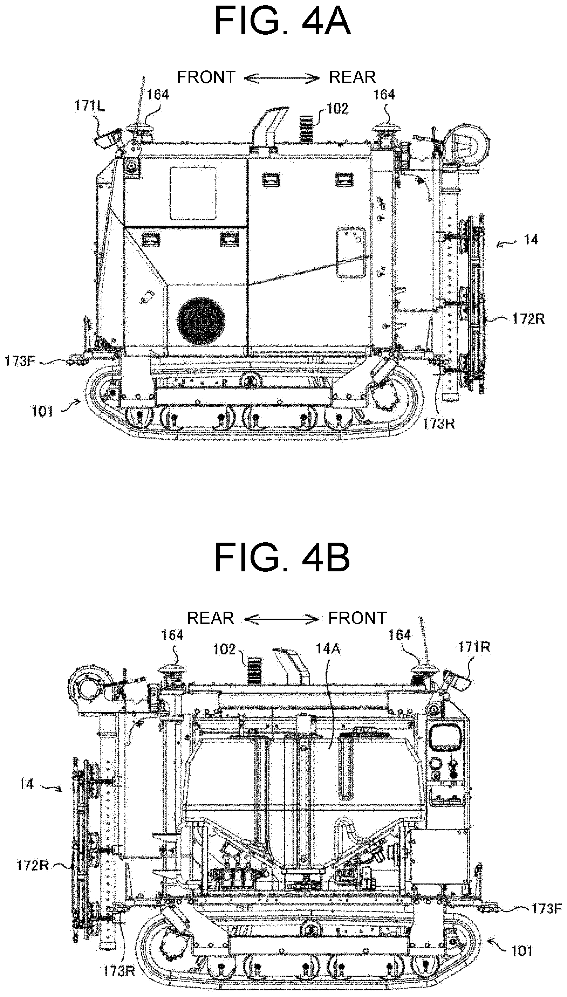

FIG. 3 is an external view obtained when the work vehicle 10 is viewed from a left front side. FIG. 4A is an external view of a left side face obtained when the work vehicle 10 is viewed from a left side, FIG. 4B is an external view of a right side face obtained when the work vehicle 10 is viewed from a right side, and FIG. 4C is an external view of a rear face obtained when the work vehicle 10 is viewed from a rear face side.

As illustrated in FIGS. 1 to 4, the work vehicle 10 includes a vehicle control device 11, a storage unit 12, a travel device 13, a spray device 14, a communication unit 15, a positioning device 16, and an obstacle detection device 17, for example. The vehicle control device 11 is electrically connected to the storage unit 12, the travel device 13, the spray device 14, the positioning device 16, and the obstacle detection device 17, for example. The vehicle control device 11 and the positioning device 16 may be capable of performing wireless communication.

The communication unit 15 is a communication interface for connecting the work vehicle 10 to the communication network N1 in a wired or wireless manner to execute data communication according to a predetermined communication protocol between the work vehicle 10 and an external device such as the operation terminal 20 via the communication network N1.

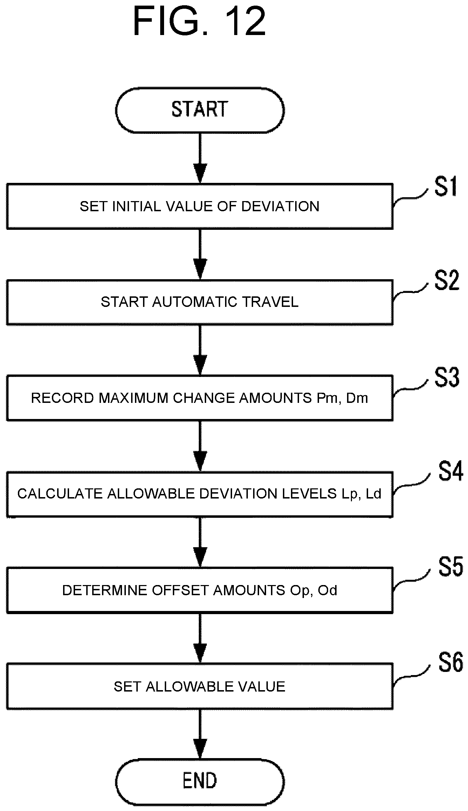

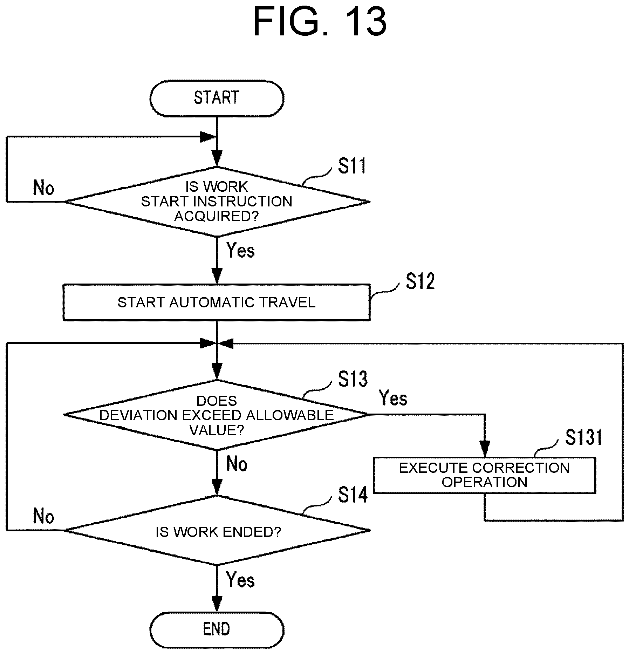

The storage unit 12 is a non-volatile storage unit including a hard disk drive (HDD) or a solid state drive (SSD) that stores various types of information. The storage unit 12 stores a control program such as an automatic traveling program for causing the vehicle control device 11 to execute an automatic traveling process (see FIGS. 12 and 13) described later. For example, the automatic traveling program is recorded non-temporarily on a computer-readable recording medium such as a CD or a DVD, and is read by a predetermined reading device (not illustrated) to be stored in the storage unit 12. It is noted that the automatic traveling program may be downloaded from a server (not illustrated) to the work vehicle 10 via the communication network N1 and stored in the storage unit 12. The storage unit 12 stores route data including information on the target route R generated by the operation terminal 20 and deviation information F1 and F2 (described later) on deviations (the position deviation and the orientation deviation) of the work vehicle 10. For example, the route data is transferred from the operation terminal 20 to the work vehicle 10 to be stored in the storage unit 12.

The vehicle control device 11 includes a control device such as a CPU, a ROM, and a RAM. The CPU is a processor that executes various types of arithmetic processes. The ROM is a non-volatile storage unit in which a control program such as BIOS and OS for causing the CPU to execute various types of arithmetic processes is stored in advance. The RAM is a volatile or non-volatile storage unit that stores various types of information, and is used as a temporary storage memory (working area) for various types of processes executed by the CPU. The vehicle control device 11 controls the work vehicle 10 by causing the CPU to execute various types of control programs stored in advance in the ROM or the storage unit 12.

The vehicle control device 11 controls the travel of the work vehicle 10. Specifically, as illustrated in FIG. 2, the vehicle control device 11 includes various types of processing units such as a travel processing unit 111, a detection processing unit 112, a correction processing unit 113, and a setting processing unit 114. The vehicle control device 11 functions as the various types of processing units by causing the CPU to execute various types of processes according to the control programs. Some or all of the processing units may be configured by an electronic circuit. The control programs may be programs for causing a plurality of processors to function as the processing units.

The travel processing unit 111 causes the work vehicle 10 to automatically travel along the target route R, based on positioning information including a position and an orientation of the work vehicle 10 positioned by the positioning device 16. For example, when the positioning state is a state where RTK positioning is possible and an operator depresses a start button on an operation screen of the operation terminal 20, the operation terminal 20 outputs a work start instruction to the work vehicle 10. When acquiring the work start instruction from the operation terminal 20, the travel processing unit 111 causes the work vehicle 10 to start automatic travel, based on the positioning information of the work vehicle 10 positioned by the positioning device 16. Thus, the work vehicle 10 starts automatic travel along the target route R, and starts the spraying work by the spray device 14 in the work passage.

When acquiring a travel stop instruction from the operation terminal 20, the travel processing unit 111 causes the work vehicle 10 to stop automatic travel. For example, if the operator depresses a stop button on the operation screen of the operation terminal 20, the operation terminal 20 outputs the travel stop instruction to the work vehicle 10. When acquiring the travel stop instruction from the operation terminal 20, the travel processing unit 111 causes the work vehicle 10 to stop automatic travel. Thus, the work vehicle 10 stops the automatic travel and stops the spraying work by the spray device 14. The travel processing unit 111 is an example of the travel processing unit according to the present invention.

Here, the work vehicle 10 includes an inverted U-shaped vehicle body 100 that travels across the crops V (fruit trees) planted side by side in a plurality of rows in the farm field F. As illustrated in FIG. 4C, the vehicle body 100 is formed in an inverted U-shape by the left-side part 100L, the right-side part 100R, and a connection unit 100C connecting the left-side part 100L and the right-side part 100R, and a space 100S that allows the passage of the crops V is secured inside the left-side part 100L, the right-side part 100R, and the connection unit 100C.

A crawler 101 is provided at the lower end of each of the left-side part 100L and the right-side part 100R of the vehicle body 100. The left-side part 100L is provided with an engine (not illustrated), a battery (not illustrated), and the like. The right-side part 100R is provided with a storage tank 14A (see FIG. 4B) of the spray device 14 and the like. Thus, constitution components are arranged in a distributed manner in the left-side part 100L and the right-side part 100R of the vehicle body 100, and thus, a balance between the left and right sides and a low center of gravity are achieved in the work vehicle 10. Thus, the work vehicle 10 can stably travel on a slope or the like of the farm field F.

The travel device 13 is a drive unit that causes the work vehicle 10 to travel. The travel device 13 includes the engine, the crawler 101, and the like.

The left and right crawlers 101 are driven by power from the engine in a state where independent transmission is possible by a hydrostatic continuously variable transmission. Thus, when the left and right crawlers 101 are driven at a constant speed in the forward direction, the vehicle body 100 is in a forward-moving state of moving straight in the forward direction, and when the left and right crawlers 101 are driven at a constant speed in the backward direction, the vehicle body 100 is in a backward-moving state of moving straight in the backward direction. When the left and right crawlers 101 are driven at an irregular speed in the forward direction, the vehicle body 100 is in a forward-moving and turning state where the vehicle body 100 moves forward while turning, and when the left and right crawlers 101 are driven at an irregular speed in the backward direction, the vehicle body 100 is in a backward-moving and turning state where the vehicle body 100 moves backward while turning. When one of the left and right crawlers 101 is stopped in drive while the other one of the crawlers 101 is driven, the vehicle body 100 is in a pivot turning (pivot turn) state, and when the left and right crawlers 101 are driven at a constant speed in the forward direction and in the backward direction, the vehicle body 100 is in a spin turning (neutral turn) state. When the left and right crawlers 101 are stopped in drive, the vehicle body 100 stops traveling. The left and right crawlers 101 may have an electrically driven configuration in which the left and right crawlers 101 are driven by an electric motor.

As illustrated in FIG. 4C, the spray device 14 includes the storage tank 14A that stores chemical liquids or the like, a spraying pump (not illustrated) that pumps chemical liquids or the like, an electric spraying motor (not illustrated) that drives the spraying pump, two spraying pipes 14B installed in parallel on each of the left and right in a vertical position at the rear of the vehicle body 100, a total of 12 spraying nozzles 14C in which three nozzles are installed on each of the spraying pipes 14B, an electronically controlled valve unit (not illustrated) that changes a spraying amount and a spraying pattern of a chemical liquid, a plurality of spraying pipes (not illustrated) that connects these components, and the like.

Each of the spraying nozzles 14C is changeably attached to the corresponding spraying pipe 14B to be vertically repositionable. Thereby, each of the spraying nozzles 14C can change a distance from an adjacent spraying nozzle 14C and a height position with respect to the spraying pipe 14B according to the targets (crops V) to be sprayed. Further, each of the spraying nozzles 14C is attached so that the height position and the left-right position with respect to the vehicle body 100 can be changed according to the targets to be sprayed.

In the spray device 14, the number of the spraying nozzles 14C provided in each of the spraying pipes 14B can be variously changed according to the type of crops V, the length of each of the spraying pipes 14B, and the like.

As illustrated in FIG. 4C, three spraying nozzles 14C provided on the leftmost spraying pipe 14B out of the plurality of spraying nozzles 14C spray the chemical liquid to the left toward a crop Va located on the leftward and outward of the vehicle body 100. Three spraying nozzles 14C provided on the left inner spraying pipe 14B adjacent to the leftmost spraying pipe 14B out of the plurality of spraying nozzles 14C spray the chemical liquid to the right toward a crop Vb located in the left and right central space 100S of the vehicle body 100. Three spraying nozzles 14C provided on the rightmost spraying pipe 14B out of the plurality of spraying nozzles 14C spray the chemical liquid to the right toward a crop Vc located on the rightward and outward of the vehicle body 100. Three spraying nozzles 14C provided on the right inner spraying pipe 14B adjacent to the rightmost spraying pipe 14B out of the plurality of spraying nozzles 14C spray the chemical liquid to the left toward the crop Vb located in the space 100S.

With the above configuration, in the spray device 14, the two spraying pipes 14B and the six spraying nozzles 14C provided on the left-side part 100L of the vehicle body 100 function as a left spraying unit 14L. Further, the two spraying pipes 14B and the six spraying nozzles 14C provided on the right-side part 100R of the vehicle body 100 function as a right spray portion 14R. The left and right spraying units 14L and 14R are provided with a horizontal interval allowing for passage of the crop Vb (the space 100S) between the left and right spraying units 14L and 14R in a state where the left and right spraying units 14L and 14R can spray the chemical liquid in the left-right direction on the rear of the vehicle body 100.

In the spray device 14, the spraying patterns of the spraying units 14L and 14R include a four-way spraying pattern in which each of the spraying units 14L and 14R sprays the chemical liquid in both the left and right directions, and a direction-restricted spraying pattern in which the spraying direction of the spraying units 14L and 14R is restricted. The direction-restricted spraying pattern includes a left-side three-way spraying pattern in which the spraying unit 14L sprays the chemical liquid in both the left and right directions and the spraying unit 14R sprays the chemical liquid only in the left direction, and a right-side three-way spraying pattern in which the spraying unit 14L sprays the chemical liquid only in the right direction and the spraying unit 14R sprays the chemical liquid in both the left and right directions, a two-way spraying pattern in which the spraying unit 14L sprays the chemical liquid only in the right direction and the spraying unit 14R sprays the chemical liquid only in the left direction, a left-side unidirectional spraying pattern in which the spraying unit 14L sprays the chemical liquid only in the left direction and the spraying unit 14R does not spray the chemical liquid, and a right-side unidirectional spraying pattern in which the spraying unit 14R sprays the chemical liquid only in the right direction and the spraying unit 14L does not spray the chemical liquid.

The vehicle body 100 is equipped with an automatic travel control unit that causes the vehicle body 100 to automatically travel according to the target route R of the farm field F, based on the positioning information and the like acquired from the positioning device 16, an engine control unit that controls the engine, a hydro-static transmission (HST) control unit that controls the hydrostatic continuously variable transmission, and a work device control unit that controls a work device such as the spray device 14. Each of the control units is constructed by an electronic control unit equipped with a microcontroller and the like, various types of information and control programs stored in a non-volatile memory (for example, an EEPROM such as a flash memory) of the microcontroller, and the like. The various types of information stored in the non-volatile memory may include the target route R generated in advance or the like. In the present embodiment, the control units are collectively referred to as the "vehicle control device 11" (see FIG. 2).

The positioning device 16 is a communication equipment including a positioning control unit 161, a storage unit 162, a communication unit 163, the antenna 164, and the like. The antenna 164 is provided at the front and rear parts of a roof (the connection unit 100C) of the vehicle body 100 (see FIG. 3). The roof of the vehicle body 100 is also provided with an indication lamp 102 or the like for indicating a travel state of the work vehicle 10 (see FIG. 3). The battery is connected to the positioning device 16, so that the positioning device 16 can operate even when the engine is stopped.

The communication unit 163 is a communication interface for connecting the positioning device 16 to the communication network N1 in a wired or wireless manner to execute data communication, according to a predetermined communication protocol, between the communication unit 163 and an external device such as the base station 40 via the communication network N1.

The antenna 164 is an antenna that receives radio waves (GNSS signals) transmitted from satellites. Since the antenna 164 is provided at the front and rear parts of the work vehicle 10, the current position and the current orientation of the work vehicle 10 can be accurately positioned.

The positioning control unit 161 is a computer system including one or more processors and a storage memory such as a non-volatile memory and a RAM. The storage unit 162 is a control program for causing the positioning control unit 161 to execute the positioning process, and a non-volatile memory for storing data such as positioning information and movement information. The positioning control unit 161 positions the current position and the current orientation of the work vehicle 10 by a predetermined positioning method (RTK method or the like) based on the GNSS signal received from the satellite 50 by the antenna 164.

The obstacle detection device 17 includes a LiDAR sensor 171L provided on the front and left side of the vehicle body 100 and a LiDAR sensor 171R provided on the front and right side of the vehicle body 100 (see FIG. 3). Each LiDAR sensor measures a distance from the LiDAR sensor to each ranging point (measurement target) in the measurement range by a time of flight (TOF) method for measuring the distance to the ranging point, based on a round-trip time required by laser light input to the LiDAR sensor to reach the ranging point and return to the LiDAR sensor, for example.

The LiDAR sensor 171L has a predetermined range on the front and left side of the vehicle body 100 set as a measurement range, and the LiDAR sensor 171R has a predetermined range on the front and right side of the vehicle body 100 set as a measurement range. Each LiDAR sensor transmits measurement information such as the measured distance to each ranging point and the scanning angle (coordinates) for each ranging point to the vehicle control device 11.

Further, the obstacle detection device 17 includes left and right ultrasonic sensors 172F (see FIG. 3) provided on the front side of the vehicle body 100 and left and right ultrasonic sensors 172R (see FIGS. 4A and 4B) provided on the rear side of the vehicle body 100. Each ultrasonic sensor measures a distance from the ultrasonic sensor to a measurement target by the TOF method for measuring a distance to a ranging point, based on a round-trip time from when an ultrasonic wave is transmitted by the ultrasonic sensor to reach the ranging point to when the ultrasonic wave returns.

The ultrasonic sensor 172F on the front and left side has a predetermined range on the front and left side of the vehicle body 100 set as the measurement range, the ultrasonic sensor 172F on the front and right side has the predetermined range on the front and right side of the vehicle body 100 set as the measurement range, the ultrasonic sensor 172R on the rear and left side has a predetermined range on the rear and left side of the vehicle body 100 set as the measurement range, and the ultrasonic sensor 172R on the rear and right side has the predetermined range on the rear and right side of the vehicle body 100 set as the measurement range. Each ultrasonic sensor transmits measurement information including the distance to the measurement target and the direction of the object to be measured to the vehicle control device 11.

Further, the obstacle detection device 17 includes left and right contact sensors 173F (see FIG. 3) provided on the front side of the vehicle body 100 and left and right contact sensors 173R (see FIGS. 4A and 4B) provided on the rear side of the vehicle body 100. The contact sensor 173F on the front side of the vehicle body 100 detects an obstacle when an obstacle comes into contact with the contact sensor 173F. The spray device 14 is provided in front of the contact sensor 173R on the rear side of the vehicle body 100 (rear side of the work vehicle 10), and when an obstacle comes into contact with the spray device 14, the contact sensor 173R detects the obstacle by the spray device 14 moving to the rear (toward the front side of the work vehicle 10). Each contact sensor transmits a detection signal to the vehicle control device 11 when an obstacle is detected.

The vehicle control device 11 executes an avoidance process for avoiding an obstacle when the work vehicle 10 may collide with the obstacle based on the measurement information about the obstacle acquired from the obstacle detection device 17.

Further, the vehicle control device 11 detects a position deviation and an orientation deviation of the work vehicle 10 to perform an operation (correction operation) to avoid a collision with the crop rows Vr.

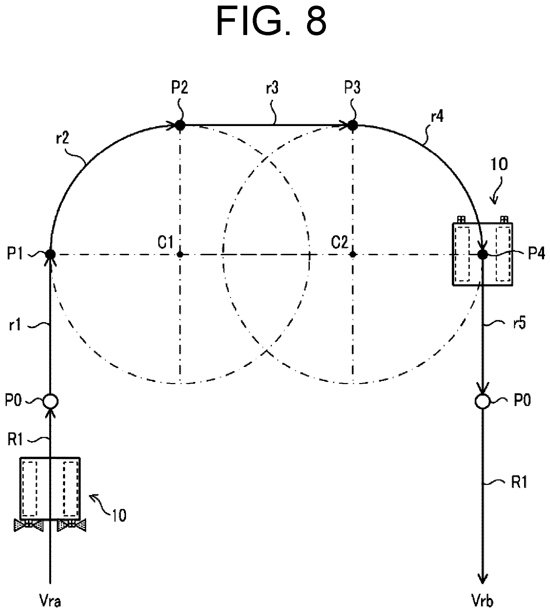

For example, the travel processing unit 111 moves the work vehicle 10 from the work route R1 of the crop row Vra to the work route R1 of the crop row Vrb according to the target route R illustrated in FIG. 8. When reaching the end point P0 of the crop row Vra, the work vehicle 10 stops the spraying, travels straight on a straight route r1, and starts turning at a turning start position P1. When starting the turning, the work vehicle 10 moves from a turning route r2, then a straight route r3, to a turning route r4, travels straight from a turn end position P4 to a straight route r5, and moves to an end point P0 of a crop row Vrb being a next work route R1 to resume spraying. In FIG. 8, reference symbol C1 indicates a turning center of the turning route r2, and reference symbol C2 indicates a turning center of the turning route r4. Turning radii of the turning routes r2 and r4 are the same.

The detection processing unit 112 of the vehicle control device 11 detects the position deviation and the orientation deviation of the work vehicle 10 traveling automatically. Specifically, the detection processing unit 112 detects the position deviation and the orientation deviation of the work vehicle 10 with respect to the target route R, based on the positioning information (a current position and a current orientation) from the positioning device 16.

The correction processing unit 113 of the vehicle control device 11 determines whether the position deviation detected by the detection processing unit 112 exceeds a previously set threshold value (position threshold value). The correction processing unit 113 executes a correction operation for correcting the position deviation if the position deviation exceeds a position threshold value. Further, the correction processing unit 113 determines whether the orientation deviation detected by the detection processing unit 112 exceeds a previously set threshold value (orientation threshold value). The correction processing unit 113 executes a correction operation for correcting the orientation deviation if the orientation deviation exceeds an orientation threshold value. The position threshold value and the orientation threshold value are set previously in, for example, the operation terminal 20. Each of the position threshold value and the orientation threshold value is an example of a threshold value of the present invention. The correction processing unit 113 is an example of a correction processing unit according to the present invention.

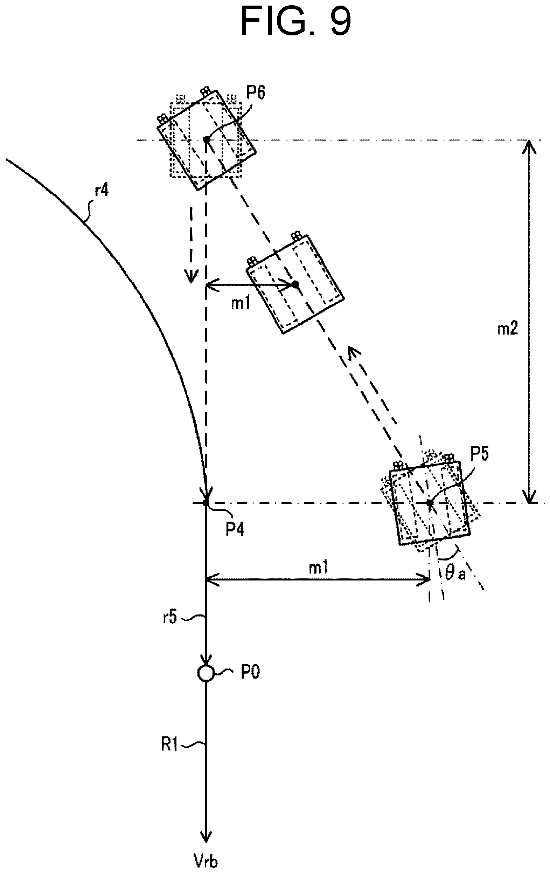

An example of the correction operation will be described now with reference to FIG. 9. FIG. 9 illustrates a part of the target route R including the turning route r4 and the straight route r5, which are illustrated in FIG. 8. For example, if the work vehicle 10 deviates from the turning route r4 of the target route R, and at a position P5 of a distance m1 (position deviation) from a target turning end position P4, a position deviation m1 exceeds the position threshold value and an orientation deviation $\theta a$ exceeds the orientation threshold value, the correction processing unit 113 executes the following correction operation. Firstly, the correction processing unit 113 causes the work vehicle 10 to spin-turn (neutrally turn) at the position P5 until the orientation deviation $\theta a$ of the work vehicle 10 with respect to the direction of a straight line connecting the position P5 and a position P6 on the extended line of the straight route r5 is equal to or less than the orientation threshold value.

Next, the correction processing unit 113 causes the work vehicle 10 to travel backward until the work vehicle 10 reaches the position P6 or until the position deviation m1 of the work vehicle 10 with respect to the extended line of the straight route r5 is equal to or less than the position threshold value. It is noted that the target position of the position P6 is a position which is at a distance m2 (for example, 2 m) from the turning end position P4.

Next, the correction processing unit 113 causes the work vehicle 10 to spin-turn (neutrally turn), for example, at the position P6 until the orientation deviation of the work vehicle 10 with respect to the direction of the extended line of the straight route r5 is equal to or less than the orientation threshold value. Next, the correction processing unit 113 causes the work vehicle 10 to travel straight from the position P6 to the turning end position P4 along the extended line of the straight route r5. After that, the travel processing unit 111 causes the work vehicle 10 to travel straight on the straight route r5 and enter the work route R1 of the crop row Vrb from the end point P0.

The correction processing unit 113 executes the correction operation every time the position deviation exceeds the position threshold value, and executes the correction operation every time the orientation deviation exceeds the orientation threshold value. Therefore, as in the conventional case, if the threshold value (the position threshold value or the orientation threshold value) is uniformly fixed, for example, for example, when a condition of the farm field F (topsoil) is not good and when the farm field F is sloped, as a result of the deviation (the position deviation or the orientation deviation) frequently exceeding the threshold value, the correction operation is repeatedly executed. This causes a problem that the work efficiency of spraying work with the work vehicle 10 is reduced. On the other hand, in the work vehicle 10 according to the present embodiment, if the correction operation is prevented from being repeatedly executed, it is possible to improve the work efficiency of the spraying work.

Specifically, the setting processing unit 114 of the vehicle control device 11 changeably sets the threshold value of at least one of the position deviation and the orientation deviation of the work vehicle 10 with respect to the target route R. For example, the setting processing unit 114 changes the position threshold value and orientation threshold value previously set, based on travel history information of the work vehicle 10. The setting processing unit 114 is an example of a setting processing unit according to the present invention.

Specifically, firstly, the setting processing unit 114 sets an initial value (a position initial value and an orientation initial value) of each of the position deviation and the orientation deviation with respect to the work route R1. The initial value is, for example, a setting value (design value) at the time of shipment from the factory, and is determined based on a width of the corresponding crop row Vr, the position control accuracy of the work vehicle 10, and the like. Next, the travel processing unit 111 causes the work vehicle 10 to execute the spraying work while causing the work vehicle 10 to automatically travel according to the target route R. While the work vehicle 10 automatically traveling, the detection processing unit 112 calculates and records a maximum change amount Pm of the position deviation with respect to the position initial value and a maximum change amount Dm of the orientation deviation with respect to the orientation initial value, for each of the plurality of work routes R1 (see FIG. 6) included in the target route R, in a region within a predetermined distance from the end point P0 on a side entering the work route R1. The detection processing unit 112 calculates, an allowable position deviation level Lp corresponding to the maximum change amount Pm and an allowable orientation deviation level Ld corresponding to the maximum change amount Dm, for each work route R1. The allowable position deviation level Lp is an index representing a level (stage) at which the position deviation is allowable, which does not require the above-mentioned correction operation for the work route R1, and the allowable orientation deviation level Ld is an index representing a level (stage) at which the orientation deviation is allowable, which does not require the above-mentioned correction operation for the work route R1.

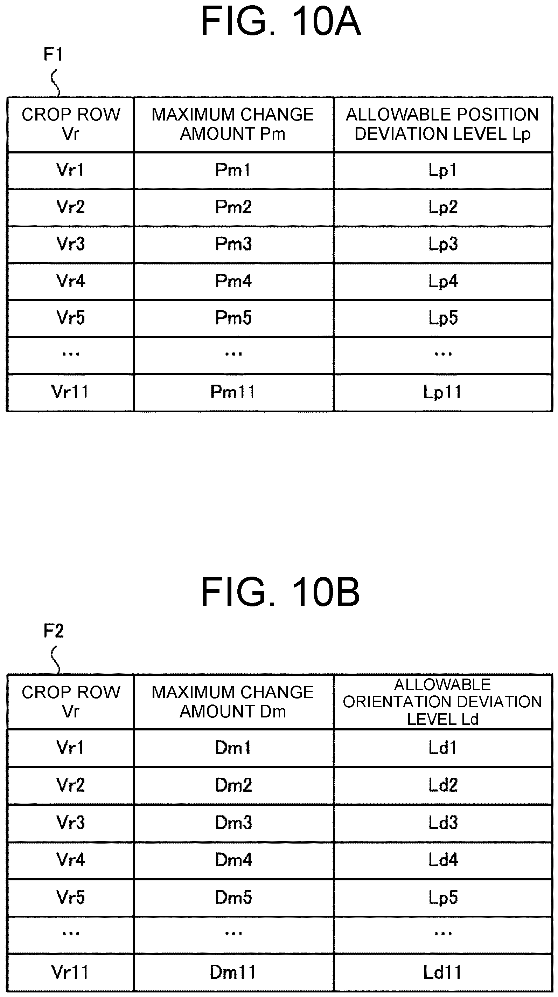

The detection processing unit 112 executes automatic travel and the spraying work to store the position deviation information F1 obtained by recording the maximum change amount Pm and the allowable position deviation level Lp in an associated manner for each work route R1 and the orientation deviation information F2 obtained by recording the maximum change amount Dm and the allowable orientation deviation level Ld in an associated manner for each work route R1, into the storage unit 12. FIG. 10A is a table showing an example of the position deviation information F1 and FIG. 10B is a table showing an example of the orientation deviation information F2. Each of the position deviation information F1 and the orientation deviation information F2 is an example of travel history information according to the present invention.

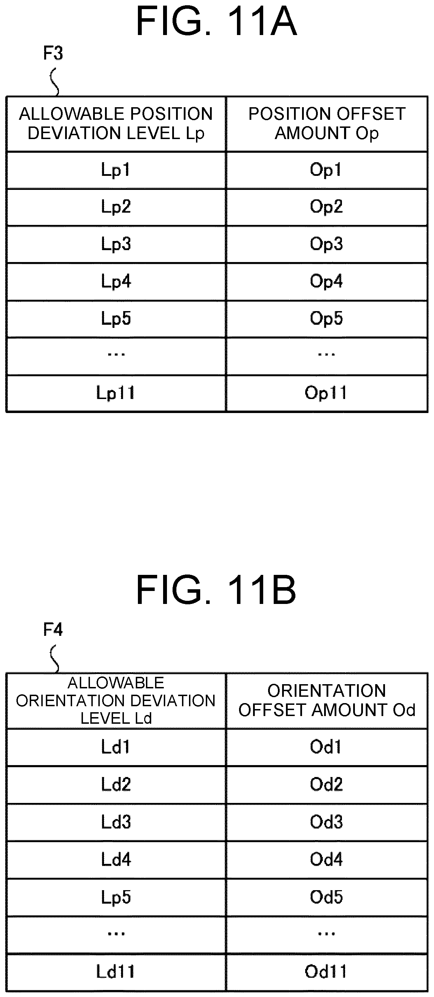

The setting processing unit 114 changes the position threshold value and orientation threshold value previously set, based on the past position deviation information F1 and orientation deviation information F2 recorded by the detection processing unit 112. Specifically, the setting processing unit 114 determines, for each work route R1, a position offset amount Op with respect to the position threshold value and an orientation offset amount Od with respect to the orientation threshold value. The position offset amount Op is correction information of the previously set position threshold value and the orientation offset amount Od is correction information of the previously set orientation threshold value. The storage unit 12 previously stores position correction information F3 indicating a position offset amount Op corresponding to the allowable position deviation level Lp (see FIG. 11A) and orientation correction information F4 indicating an orientation offset amount Od corresponding to the allowable orientation deviation level Ld (see FIG. 11B). The setting processing unit 114 refers to the position correction information F3 to determine the position offset amount Op for the position threshold value for each work route R1, and refers to the orientation correction information F4 to determine the orientation offset amount Od for the orientation threshold value for each work route R1.

The setting processing unit 114 sets a value obtained by adding or subtracting the position offset amount Op to or from the previously set position threshold value as the position threshold value for the next spraying work. The setting processing unit 114 sets a value obtained by adding or subtracting the orientation offset amount Od to or from the previously set orientation threshold value as the orientation threshold value for the next spraying work. For example, the setting processing unit 114 acquires an allowable position deviation level Lp1 of the crop row Vr1 by referring to the position deviation information F1 being the travel history information acquired when the work vehicle 10 travels last time, acquires a position offset amount Op1 corresponding to the allowable position deviation level Lp1 by referring to the position correction information F3, and changes the previously set position threshold value by the position offset amount Op1. For example, the setting processing unit 114 acquires an allowable orientation deviation level Ld1 of the crop row Vr1 by referring to the orientation deviation information F2 being the travel history information acquired when the work vehicle 10 travels last time, acquires an orientation offset amount Op1 corresponding to the allowable orientation deviation level Ld1 by referring to the orientation correction information F4, and changes the previously set orientation threshold value by the position offset amount Op1.

As described above, the setting processing unit 114 changes the threshold values (the position threshold value and the orientation threshold value) for each of the work routes R1, based on the deviations (the position deviation and the orientation deviation) for the work route R1, for each of the work routes R1, the deviations being included in the travel history information. The setting processing unit 114 may change the threshold value of a first work route R1 and the threshold value of a second work route R1 to values different from each other.

It is noted that, in FIGS. 10A and 11A, for convenience, the allowable position deviation level Lp and the position offset amount Op are indicated at 11 stages (Lp1 to Lp11, Op1 to Op11) according to the number of work routes, but in reality, may be represented at a previously set number of stages (for example, three stages). Likewise, in FIGS. 10B and 11B, for convenience, the allowable orientation deviation level Ld and the orientation offset amount Od are indicated at 11 stages (Ld1 to Ld11, Od1 to Od11) according to the number of work routes, but in reality, may be represented at a previously set number of stages (for example, three stages).

The route data transferred from the operation terminal 20 includes information on the target route R, an area for storing the maximum change amounts Pm, Dm, and an area for storing the allowable position deviation level Lp and the allowable orientation deviation level Ld. Further, in the route data transferred from the operation terminal 20, the allowable position deviation level Lp and the allowable orientation deviation level Ld are set to a lowest value (level equivalent to an allowable deviation of 0). The vehicle control device 11 causes the work vehicle 10 to automatically travel based on the route data, and calculates the allowable position deviation level Lp and the allowable orientation deviation level Ld to update the route data. That is, the route data where the position deviation information F1 (see FIG. 10A) and the orientation deviation information F2 (see FIG. 10B) are associated is stored in the storage unit 12. The position correction information F3 and the orientation correction information F4 may be previously stored in the storage unit 12, or may be included in the route data transferred from the operation terminal 20. The travel processing unit 111 executes the next automatic travel and spraying work, based on the updated route data.

As another embodiment, the setting processing unit 114 may change, based on the travel history information of the work vehicle 10, the previously set position threshold value and orientation threshold value, for each farm field F. For example, the detection processing unit 112 calculates one maximum change amount Pm, Dm for all the work routes R1 corresponding to the crop rows Vr1 to Vr11, one allowable position deviation level Lp, and one allowable orientation deviation level Ld. As a result, the setting processing unit 114 determines one position offset amount Op and one orientation offset amount Od with respect to the farm field F to set the position threshold value and the orientation threshold value.

In the above example, the maximum change amounts of the position deviation and the orientation deviation are used, but in another embodiment, a probability statistical method may be used to utilize a method of calculating the allowable deviation level, based on variance values of deviations.

With the above configuration, it is possible to change the threshold value of the position deviation and the orientation deviation, and thus, it is possible to avoid an unnecessary correction operation of the work vehicle 10. Therefore, it is possible to increase the work efficiency of the spraying work of the work vehicle 10. Further, it is possible to use the history information obtained by actually traveling in the farm field F, and thus, it is possible to set the threshold value to an appropriate value suitable for the farm field F. Therefore, it is also possible to improve the work accuracy.

In another embodiment, the setting processing unit 114 may change the threshold value of the deviation with respect to an entering position (end point P0) at which the work vehicle 10 enters the work route R1. For example, the work accuracy of the spraying work by the work vehicle 10 is easily affected by the magnitude of the position deviation and the orientation deviation at the end point P0 at which the work vehicle 10 enters the work route R1, and as the position deviation and the orientation deviation at the end point P0 are smaller, the work accuracy is improved. Therefore, configuration may be that the setting processing unit 114 changes the threshold value of the deviations (the positional deviation and the orientation deviation) with respect to the end point P0 on the entering side of the work route R1 and does not change the threshold value of the deviations (the position deviation and the orientation deviation) within the work route R1.

Further, the setting processing unit 114 may change the threshold value of the deviation with respect to the entering position of the work route R1 to a value smaller than the threshold value of the deviation within the work route R1. Thus, when the threshold value of the deviations (the position deviation and the orientation deviation) with respect to the end point P0 on the entering side of the work route R1 is reduced (set strictly), it is possible to appropriately set the position and the orientation of the work vehicle 10 when entering the work route R1. Further, when the threshold value of the deviations within the work route R1 is increased (set roughly), it is possible to suppress the correction operation within the work route R1. Therefore, it is possible to increase the work efficiency of the spraying work of the work vehicle 10.

The above-described configuration of the work vehicle 10 is an example of the configuration of the work vehicle according to the present invention, and the present invention is not limited to the above-described configuration. The above-mentioned work vehicle 10 is a vehicle capable of performing the spraying work for spraying the spraying material to the first crop row Vr and the second crop row Vr in each of the left-right direction of the first crop row Vr while traveling across the first crop row Vr. In another embodiment, the vehicle body 100 of the work vehicle 10 may have a typical shape instead of the inverted U-shape, so that the vehicle body 100 entirely travels between the crop rows Vr (work passages). In this case, the work vehicle 10 automatically travels sequentially on each work passage, without spanning over the crop rows Vr. The spray device 14 is provided with one spraying unit and performs a spraying work while switching between a spraying pattern in which the chemical liquid is sprayed in both left and right directions, a spraying pattern in which the chemical liquid is sprayed only in the left direction, and a spraying pattern in which the chemical liquid is sprayed only in the right direction.

[Operation Terminal 20]

As illustrated in FIG. 2, the operation terminal 20 is an information processing device including a control unit 21, a storage unit 22, an operation display unit 23, and a communication unit 24. The operation terminal 20 may be composed of a mobile terminal such as a tablet terminal or a smartphone.

The communication unit 24 is a communication interface for connecting the operation terminal 20 to the communication network N1 in a wired or wireless manner to execute data communication according to a predetermined communication protocol between the operation terminal 20 and an external device such as one or more work vehicles 10 via the communication network N1.

The operation display unit 23 is a user interface including a display unit such as a liquid crystal display or an organic EL display that displays various types of information, and an operation unit such as a mouse, a keyboard, or a touch panel that receives an operation. On the operation screen displayed on the display unit, the operator can operate the operation unit to register various types of information (work vehicle information, farm field information, work information, etc., which will be described later). Further, the operator can operate the operation unit to give a work start instruction, a travel stop instruction, and the like to the work vehicle 10. At a place away from the work vehicle 10, the operator is capable of grasping the travel state, a work situation, and a surrounding situation of the work vehicle 10 automatically traveling according to the target route R within the farm field F, based on a travel trajectory displayed on the operation terminal 20 and a surrounding image of the vehicle body 100.

The storage unit 22 is a non-volatile storage unit, such as an HDD or an SSD that stores various types of information. The storage unit 22 stores a control program such as an automatic traveling program for causing the control unit 21 to execute an automatic traveling process (see FIGS. 12 and 13) described later. For example, the automatic traveling program is recorded non-temporarily on a computer-readable recording medium such as a CD or a DVD, and is read by a predetermined reading device (not illustrated) to be stored in the storage unit 22. The automatic traveling program may be downloaded from a server (not illustrated) to the operation terminal 20 via the communication network N1 and stored in the storage unit 22.

The control unit 21 includes control devices such as a CPU, a ROM, and a RAM. The CPU is a processor that executes various types of arithmetic processes. The ROM is a non-volatile storage unit in which a control program such as BIOS and OS for causing the CPU to execute various types of arithmetic processes is stored in advance. The RAM is a volatile or non-volatile storage unit that stores various types of information, and is used as a temporary storage memory (working area) for various types of processes executed by the CPU. The control unit 21 controls the operation terminal 20 by causing the CPU to execute various types of control programs stored in advance in the ROM or the storage unit 22.

As illustrated in FIG. 2, the control unit 21 includes various types of processing units such as a setting processing unit 211, a route generation processing unit 212, and an output processing unit 213. The control unit 21 functions as the various types of processing units by causing the CPU to execute various types of processes according to the control programs. Some or all of the processing units may be configured by an electronic circuit. The control programs may be programs for causing a plurality of processors to function as the processing units.

The setting processing unit 211 sets and registers information on the work vehicle 10 (hereinafter referred to as work vehicle information), information on the farm field F (hereinafter referred to as farm field information), and information on work (here, a spraying work) (hereinafter, work information).

In the setting process of the work vehicle information, the setting processing unit 211 sets information about the model of the work vehicle 10, the position where the antenna 164 is attached in the work vehicle 10, kinds of the work machine (here, the spraying device 14), the size and the shape of the work machine, the position of the work machine relative to the work vehicle 10, a vehicle speed and an engine RPM of the work vehicle 10 during working, a vehicle speed and an engine RPM of the work vehicle 10 during turning, and the like as a result of the operator operating for registering such information on the operation terminal 20. In the present embodiment, information about the spray device 14 is set as the information of the working machine.

In the setting process of the farm field information, the setting processing unit 211 sets information about the position and the shape of the farm field F, the work start position S to start the work and the work end position G to end the work (see FIG. 6), a working direction, and the like, as a result of the operator operating for registering such information on the operation terminal 20. The working direction means a direction in which the work vehicle 10 travels while performing the spraying work by the spray device 14 in the working area which is the area excluding the non-work region such as the headland from the farm field F.

It is possible to automatically obtain the information about the position and the shape of the farm field F when the operator manually causes the work vehicle 10 to encircle along the outer perimeter of the farm field F, for example, and a transition of the position information of the antenna 164 at that time is recorded. It is also possible to obtain the position and the shape of the farm field F, based on a polygon obtained by the operator operating the operation terminal 20 in a state where a map is displayed on the operation terminal 20 and designating a plurality of points on the map. A region designated by the obtained position and shape of the farm field F is a region (travel region) where the work vehicle 10 can travel.

In the setting process of the work information, as the work information, the setting processing unit 211 is configured to be set with a skipped number being the number of work routes to be skipped if the work vehicle 10 turns in the headland, a width of the headland, and the like.

The route generation processing unit 212 generates a target route R being a route on which the work vehicle 10 automatically travels, based on each of the setting information. The target route R is, for example, a route from the work start position S to the work end position G (see FIG. 6). The target route R illustrated in FIG. 6 includes a linear work route R1 for spraying the chemical liquid to the crop V in the region where the crop V is planted, and a movement route R2 for moving between the crop rows Vr without performing the spraying work.

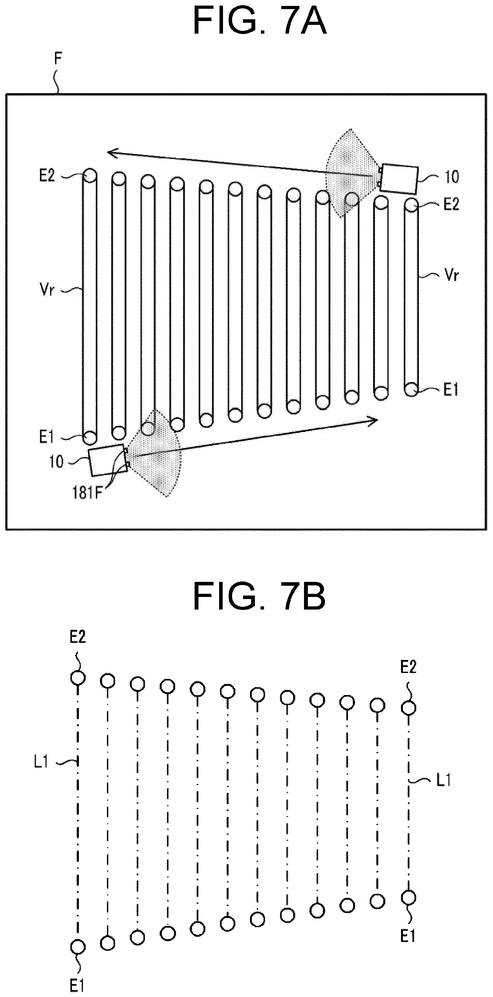

An example of a method of generating the target route R will be described with reference to FIGS. 7A and 7B. FIG. 7A schematically illustrates the crop rows Vr. Firstly, the operator manually causes the work vehicle 10 to travel along the outer perimeter of the crop rows Vr (see FIG. 7A). While traveling, the work vehicle 10 detects end points E1 on one side (lower side in FIG. 7A) and end points E2 on the other side (upper side in FIG. 7A) of the crop rows Vr, and acquires position information (coordinates) of each of the end points E1 and E2. The end points E1 and E2 may be positions of crops V that are already planted, or may be positions of target objects indicating positions of crops V that are to be planted. When acquiring the position information (coordinates) of each of the end points E1 and E2 from the work vehicle 10, the route generation processing unit 212 sets lines L1 (see FIG. 7B) connecting corresponding ones of the end points E1 and E2 as work routes of the crop rows Vr, to generate the target route R including a plurality of the work routes and movement routes (turning routes). The method of generating the target route R is not limited to the method described above. The route generation processing unit 212 may store the generated target route R in the storage unit 22.

The output processing unit 213 outputs, to the work vehicle 10, route data including information about the target route R generated by the route generation processing unit 212. The route data includes an area for storing the maximum change amounts Pm and Dm for each work route R1 and an area for storing the allowable position deviation level Lp and the allowable orientation deviation level Ld. An initial value (the lowest value at which the allowable deviation is equivalent to 0) is registered for the allowable position deviation level Lp and the allowable orientation deviation level Ld of the route data.

The output processing unit 213 may output the route data to a server (not illustrated). The server stores and manages a plurality of the route data acquired from each of the plurality of operation terminals 20 in association with the operation terminal 20 and the work vehicle 10.

In addition to the above-described processes, the control unit 21 executes a process for causing the operation display unit 23 to display various types of information. For example, the control unit 21 causes the operation display unit 23 to display a registration screen for registering work vehicle information, farm field information, work information, and the like, an operation screen for generating the target route R, an operation screen for causing the work vehicle 10 to start automatic travel, a display screen for displaying a travel state of the work vehicle 10, and the like.

Further, the control unit 21 receives various types of operations from the operator. Specifically, the control unit 21 receives a work start instruction from the operator to cause the work vehicle 10 to start a work, a travel stop instruction to stop the traveling of the work vehicle 10 traveling automatically, and the like. When the control unit 21 receives each of the instructions, the control unit 21 outputs each of the instructions to the work vehicle 10.

When the vehicle control device 11 of the work vehicle 10 acquires the work start instruction from the operation terminal 20, the vehicle control device 11 starts the automatic traveling and a spraying work of the work vehicle 10. When the vehicle control device 11 acquires the travel stop instruction from the operation terminal 20, the vehicle control device 11 stops the automatic traveling and spraying work of the work vehicle 10.

The operation terminal 20 may be accessible to the website (agricultural support site) of the agricultural support service provided by the server via the communication network N1. In this case, the operation terminal 20 is capable of functioning as an operation terminal of the server as a result of the browser program being executed by the control unit 21.

[Automatic Traveling Process]

An example of the automatic traveling process executed by the vehicle control device 11 of the work vehicle 10 and the control unit 21 of the operation terminal 20 will be described below with reference to FIGS. 12 and 13. FIG. 12 is a flowchart illustrating an example of a threshold value setting process for setting the threshold value (the position threshold value and the orientation threshold value).

The present invention may be regarded as an invention of an automatic traveling method in which one or more steps included in the automatic traveling process are executed. Further, one or more steps included in the automatic traveling process described herein may be omitted where appropriate. In addition, the steps in the automatic traveling process may be executed in a different order as long as a similar operation and effect are obtained. Here, a case where each of the steps in the automatic traveling process is executed by the vehicle control device 11 and the control unit 21 is described by way of example. However, another embodiment may be an automatic traveling method in which the steps in the automatic traveling process are executed in a distributed manner by one or more processors.

In step S1 illustrated in FIG. 12, the vehicle control device 11 sets the initial values (the position initial value and the orientation initial value) of the position deviation and the orientation deviation. Next, in step S2, the vehicle control device 11 starts the automatic travel according to the target route R (see FIG. 6).

Next, in step S3, while the work vehicle 10 automatically travels, the vehicle control device 11 calculates and records a maximum change amount Pm of the position deviation with respect to the position initial value and a maximum change amount Dm of the orientation deviation with respect to the orientation initial value, for each of the plurality of work routes R1 (see FIG. 6) included in the target route R, in a region within a predetermined distance from the end point P0 when entering the work route R1.

Next, in step S4, the vehicle control device 11 calculates, an allowable position deviation level Lp corresponding to the maximum change amount Pm and an allowable orientation deviation level Ld corresponding to the maximum change amount Dm, for each work route R1.

The vehicle control device 11 stores the position deviation information F1 (see FIG. 10A) obtained by recording the maximum change amount Pm and the allowable position deviation level Lp in an associated manner, for each work route R1 (crop row Vr), and the orientation deviation information F2 (see FIG. 10B) obtained by recording the maximum change amount Dm and the allowable orientation deviation level Ld in an associated manner, for each work route R1 (crop row Vr), into the storage unit 12.

Next, in step S5, the vehicle control device 11 determines, for each work route R1, a position offset amount Op with respect to the position threshold value and an orientation offset amount Od with respect to the orientation threshold value. Specifically, the vehicle control device 11 refers to the position correction information F3 (see FIG. 11A) to determine the position offset amount Op corresponding to the allowable position deviation level Lp, for each work route R1, and refers to the orientation correction information F4 (see FIG. 11B) to determine the orientation offset amount Od corresponding to the allowable orientation deviation level Ld, for each work route R1.

Finally, in step S6, the vehicle control device 11 sets a value obtained by adding or subtracting the position offset amount Op to or from the previously set position threshold value as a position threshold value for the next spraying work. The vehicle control device 11 sets a value obtained by adding or subtracting the orientation offset amount Od to or from the previously set orientation threshold value as the orientation threshold value for the next spraying work.

As described above, the vehicle control device 11 utilizes the past (for example, previous) travel history information to set the position threshold value and the orientation threshold value utilized for the next automatic travel and spraying work. The vehicle control device 11 may change the position threshold value and the orientation threshold value each time the work vehicle 10 travels in the farm field F, or may change the position threshold value and the orientation threshold value each time the work vehicle 10 travels the farm field F a plurality of predetermined numbers of times.

When setting the position threshold value and the orientation threshold value, the vehicle control device 11 executes the following automatic traveling process, in the next automatic travel and spraying work, for example.

In step S11 of FIG. 13, the vehicle control device 11 determines whether a work start instruction has been acquired from the operation terminal 20. For example, when an operator depresses a start button on the operation terminal 20, the operation terminal 20 outputs the work start instruction to the work vehicle 10. When the vehicle control device 11 acquires the work start instruction from the operation terminal 20 (S11: Yes), the process proceeds to step S12. The vehicle control device 11 waits until the work start instruction is acquired from the operation terminal 20 (S11: No).

In step S12, the vehicle control device 11 starts the automatic travel. For example, when acquiring the work start instruction and the route data from the operation terminal 20, the vehicle control device 11 starts the automatic travel along the target route R corresponding to the route data. The vehicle control device 11 stores the route data acquired from the operation terminal 20 into the storage unit 12.

Next, in step S13, the vehicle control device 11 determines whether at least one of the position deviation and the orientation deviation exceeds the threshold value (the position threshold value and the orientation threshold value). Specifically, the vehicle control device 11 detects the position deviation and the orientation deviation of the work vehicle 10 with respect to the target route R, based on the positioning information (the current position and the current orientation) by the positioning device 16. The vehicle control device 11 determines whether the detected position deviation exceeds the position threshold value set in the threshold value setting process (see FIG. 12) and whether the detected orientation deviation exceeds the orientation threshold value set in the threshold value setting process (see FIG. 12). If the position deviation exceeds the position threshold value (S13: Yes), or if the orientation deviation exceeds the orientation threshold value (S13: Yes), the process proceeds to step S131. If the position deviation is equal to or less than the position threshold value and the orientation deviation is equal to or less than the orientation threshold value (S13: No), the process proceeds to step S14.

In step S131, the vehicle control device 11 executes the correction operation for correcting the deviations (the position deviation and the orientation deviation) of the work vehicle 10. For example, if the position deviation exceeds the position threshold value and the orientation deviation exceeds the orientation threshold value, the vehicle control device 11 performs the neutral turn illustrated in FIG. 9 and moves backward to correct the posture of the work vehicle 10. After the correction operation is performed, the process returns to step S13, and the vehicle control device 11 restarts the automatic travel and spraying work and executes the above-mentioned determination process.

In step S14, the vehicle control device 11 determines whether the work vehicle 10 has ended the work. The vehicle control device 11 determines that the work is completed when the position of the work vehicle 10 coincides with the work end position G. When the work vehicle 10 completes the work (S14: Yes), the automatic traveling process ends. The vehicle control device 11 repeats the determination process in step S13 and the correction operation until the work vehicle 10 completes the work to continue the automatic travel.

As described above, the automatic traveling system 1 according to the present embodiment causes the work vehicle 10 to automatically travel according to the target route R in a work area (for example, the farm field F) and changeably sets the threshold value of the deviation including at least one of the position deviation and the orientation deviation of the work vehicle 10 with respect to the target route R. Further, the automatic traveling system 1 causes the work vehicle 10 to execute the correction operation for correcting the deviation if the deviation exceeds the threshold value.

Further, in the automatic traveling method according to the present embodiment, one or more processors execute causing the work vehicle 10 to automatically travel according to the target route R in the work area (the farm field F, for example), changeably setting the threshold value of the deviation including at least one of the position deviation and the orientation deviation of the work vehicle 10 with respect to the target route R, and causing the work vehicle 10 to execute a correction operation for correcting the deviation if the deviation exceeds the threshold value. Further, in the threshold value setting method according to the present embodiment, the threshold value of the deviation including at least one of the position deviation and the orientation deviation of the work vehicle 10 with respect to the target route R is changeably set.

According to the above configuration, it is possible to set the threshold value of the position deviation (deviation in position) or the orientation deviation (deviation in orientation) for the target route R to a value according to the farm field F or the work route R1. As a result, it is possible to prevent the deviation from exceeding the threshold value at a place where the correction operation is not required, and thus, it is possible to suppress an unnecessary correction operation. Therefore, it is possible to increase the work efficiency of the work by the work vehicle 10.

The present invention is not limited to the embodiments described above. Other embodiments of the present invention will be described below.

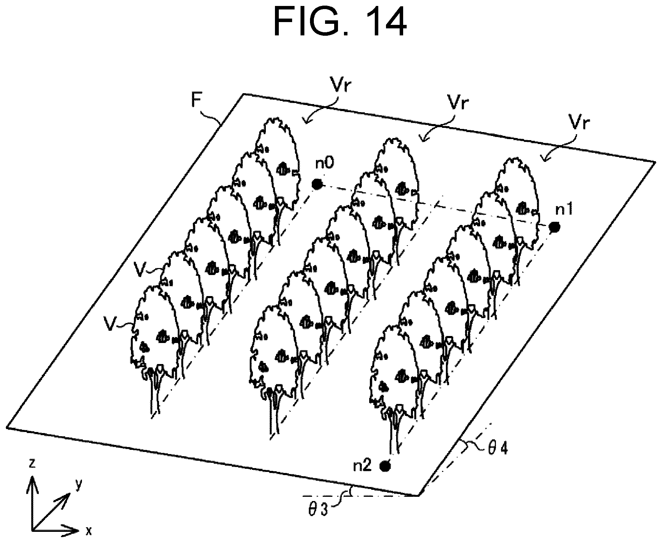

In the above-described embodiment, the setting processing unit 114 changes the position threshold value and the orientation threshold value, based on the travel history information (the position deviation information F1 and the orientation deviation information F2) of the work vehicle 10. On the other hand, in another embodiment, the setting processing unit 114 may set the threshold values, based on slope information indicating a slope of the farm field F. Specifically, as illustrated in FIG. 14, if the farm field F is sloped in the lateral direction (direction in which the crop rows are arranged) by an angle $\theta 3$ and sloped by an angle $\theta 4$ in the vertical direction (work route direction), the setting processing unit 114 calculates the allowable position deviation level and the allowable orientation deviation level, based on the slope angles $\theta 3$ and $\theta 4$. It is noted that the slope angles $\theta 3$ and $\theta 4$ are calculated according to the following equation using end points n0 (x0, y0, z0), n1 (x1, y1, z1), and n2 (x2, y2, z2) of the crop rows Vr illustrated in FIG. 14.

[Math. 1]

$$\theta 3 = \tan^{-1}\left\{\frac{(z1 - z0)}{\sqrt{(x1 - x0)^2 + (y1 - y0)^2}}\right\} \quad \cdots \quad (1)$$

[Math. 2]

$$\theta 4 = \tan^{-1}\left\{\frac{(z2 - z1)}{\sqrt{(x2 - x1)^2 + (y2 - y1)^2}}\right\} \quad \cdots \quad (2)$$

For example, the setting processing unit 114 previously creates a map function from test data obtained by an actual machine or test data obtained through a simulation, and calculates the allowable position deviation level and the allowable orientation deviation level according to the slope angles $\theta 3$ and $\theta 4$ by using the map function. The setting processing unit 114 sets, based on the position offset amount Op and the orientation offset amount Od corresponding to the calculated allowable position deviation level and allowable orientation deviation level, the position threshold value and the orientation threshold value.

Thus, the setting processing unit 114 calculates the slope of the farm field F, based on altitude information (z coordinate information) indicating the altitude of the end point P0 of the work route R1.

According to such a configuration, the allowable position deviation level and the allowable orientation deviation level are calculated at the time of creating the map of the farm field F, and thus, it is not necessary to calculate the maximum change amounts Pm, Dm, the allowable position deviation level Lp, and the allowable orientation deviation level Ld during the automatic travel of the work vehicle 10. Therefore, it is possible to reduce the processing load of the work vehicle 10 during automatic travel.

It is noted that in the above configuration, the control unit 21 of the operation terminal 20 may calculate the allowable position deviation level and the allowable orientation deviation level, and determine the position offset amount Op and the orientation offset amount Od corresponding to the calculated allowable position deviation level and allowable orientation deviation level, which are set to the position threshold value and the orientation threshold value. In this case, the position correction information F3 and the orientation correction information F4 are recorded in the storage unit 22 of the operation terminal 20. The control unit 21 transfers the route data including the target route R, the position threshold value, and the orientation threshold value to the work vehicle 10.

In another embodiment of the present invention, the setting processing unit 114 may set the threshold value, based on a topsoil condition of the farm field F. Specifically, the setting processing unit 114 determines, based on an image captured by a camera (not illustrated) mounted on the work vehicle 10, a detection result by another external sensor (not illustrated), and the like, the topsoil state (road surface state) of the farm field F, and dynamically determines the allowable position deviation level and the allowable orientation deviation level, based on the determination result. It is noted that, if the image captured by the camera is used, the setting processing unit 114 may calculate the allowable position deviation level and the allowable orientation deviation level from image data by using a deep learning method (End to End learning).

If using a three-dimensional sensor as the external sensor, the setting processing unit 114 may measure the slope angle of a road surface, unevenness of the road surface, and the like, and calculate the allowable position deviation level and the allowable orientation deviation level by using a conversion function set in advance. It is noted that, in the method using the external sensor, it is possible to dynamically set the position threshold value and the orientation threshold value before the vehicle enters the crop row Vr without having traveled in the farm field F, and it is also possible to respond to sudden changes in road surface conditions from the previous travel.

[Reference Embodiment]

A reference embodiment of the automatic traveling system 1 according to the present embodiment will be described below. The automatic traveling system 1 may include a configuration described in the following reference embodiment.

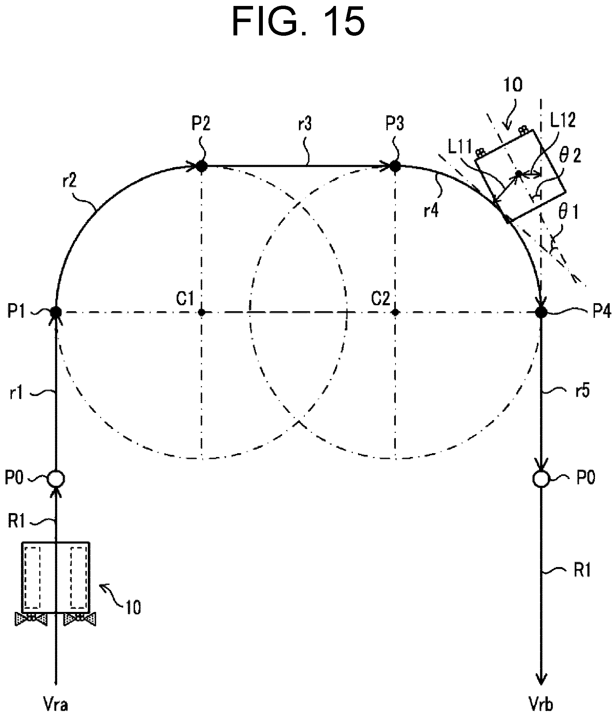

FIG. 15 illustrates a state where in the work vehicle 10 traveling automatically, a position deviation from a turning route r4 of the target route R by a distance L11 is generated and an orientation deviation by an angle $\theta 1$ is generated.

Here, if a distance L12 from an extended line of a route (straight route r5) subsequent to the turning route r4 is smaller than a position deviation L11 and the distance L12 is equal to or less than a position threshold value, the vehicle control device 11 controls the work vehicle 10 to stop the turning operation along the turning route r4 and to transition to an operation for moving to a turning end position P4 along the extended line and an operation for moving straight along the straight route r5. It is noted that a condition for moving from the turning operation to a next moving-straight operation may include a condition that "the angle $\theta 2$ of the work vehicle 10 with respect to the extended line of the route (straight route r5) subsequent to the turning route r4 is smaller than the orientation deviation $\theta 1$." When such a condition is included, the work vehicle 10 can transition to the next moving-straight operation without performing the neutral turn operation.

According to the above configuration, even if the position deviation and the orientation deviation with respect to the route on which the work vehicle 10 travels are large, when the position deviation and the orientation deviation with respect to the next route are small, the work vehicle 10 terminates the operation for the route on which the work vehicle 10 travels and transitions to the operation for the next route, and thus, it is possible to continue the travel operation while suppressing an unnecessary correction operation. Therefore, it is possible to improve the work efficiency of the work vehicle 10.

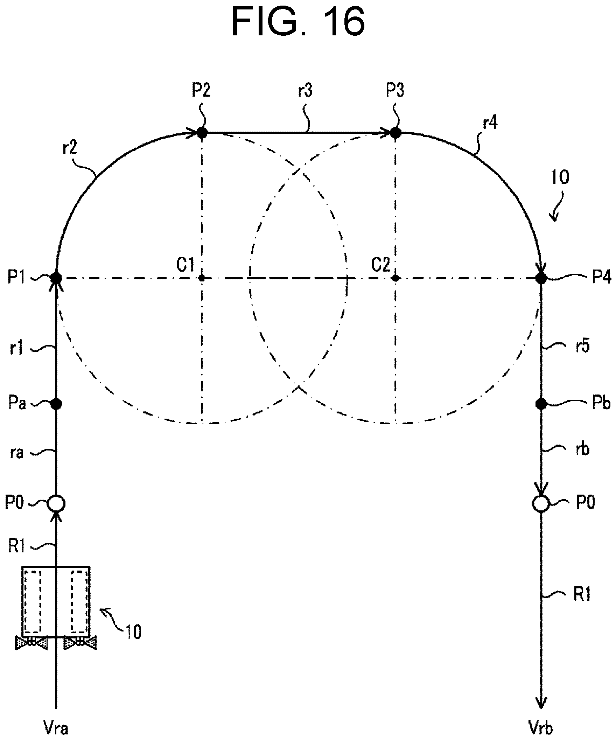

FIG. 16 illustrates a movement route in which the work vehicle 10 moves from the crop row Vra to the crop row Vrb. Lengths of routes ra and rb illustrated in FIG. 16 correspond to lengths from a center position (positioning position) of the work vehicle 10 to positions of spraying units 14L and 14R. For example, the work vehicle 10 continues the spraying work even when the center position reaches the end point P0, and stops the spraying work when the center position reaches the position Pa. After stopping the spraying work, the work vehicle 10 moves straight on a straight route r1 to the turning start position P1. The work vehicle 10 moves straight on the straight route r1 while correcting the position deviation and the orientation deviation, and starts turning when reaching the turning start position P1. Thus, the straight route r1 serves a role of an adjustment zone for adjusting the work vehicle 10 to an appropriate posture before turning. The route generation processing unit 212 sets the straight route r1 according to the size of a headland area. If the straight route r1 is set to have a long distance, it is possible to set the work vehicle 10 before starting turning to the optimum posture. As a result, it is possible to reduce the position deviation and the orientation deviation associated with the turning operation, and also possible to reduce the correction operation. Thus, the route generation processing unit 212 may set the adjustment zone (straight route r1) for adjusting the posture of the work vehicle 10 turning in the headland area.

REFERENCE SIGNS LIST

    1...Automatic traveling system
    10... Work vehicle
    11...Vehicle control device

111...Travel processing unit
112...Detection processing unit
113...Correction processing unit
114...Setting processing unit
14...Spray device
20...Operation terminal
211...Setting processing unit
212...Route generation processing unit
213...Output processing unit
40...Base station
50...Satellite
F...Farm field (work area)
m1... Position deviation (deviation)
$\theta a$...Orientation deviation (deviation)
F1...Position deviation information
F2...Orientation deviation information
F3...Position correction information
F4...Orientation correction information
P0...End point (entry position)
R...Target route
R1...Work route
V...Crop
Vr...Crop row
$\theta 3$...(Horizontal) slope angle (slope)
$\theta 4$...(Vertical) slope angle (slope)

## Claims

1. An automatic traveling method, comprising:

   causing a work vehicle (10) to automatically travel according to a target route (R) in a work area (F) where crops (V) are planted;
   changeably setting, with respect to the target route (R), a threshold value of a deviation including at least one of a position deviation and an orientation deviation of the work vehicle (10); and
   causing the work vehicle (10) to execute a correction operation for correcting the deviation if the deviation exceeds the threshold value, to avoid collision against the crops (V) during automatic travelling.

2. The automatic traveling method according to claim 1, wherein the threshold value is changed based on travel history information of the work vehicle.

3. The automatic traveling method according to claim 2, wherein the target route (R) includes a plurality of work routes (R1) arranged in a plurality of rows, and
   the threshold value is changed for each of the plurality of work routes, based on the deviation relating to each of the plurality of work routes (R1), which is included in the travel history information.

4. The automatic traveling method according to claim 3, wherein the target route (R) includes a first work route and a second work route, and
   the threshold value of the first work route and the threshold value of the second work route are changed to values different from each other.

5. The automatic traveling method according to claim 3 or 4, wherein the threshold value of the deviation with respect to an entering position entered by the work vehicle (10) into the work route (R) is changed.

6. The automatic traveling method according to claim 5, wherein the threshold value of the deviation with respect to the entering position of the work route (R) is changed to a value smaller than the threshold value of the deviation within the work route (R).

7. The automatic traveling method according to claim 1, wherein the threshold value is set based on slope information indicating a slope of the work area (F).

8. The automatic traveling method according to claim 7, wherein the target route includes a plurality of work routes arranged in a plurality of rows, and
the slope is calculated based on altitude information indicating an altitude of an end point of the work route.

9. The automatic traveling method according to claim 1, wherein the threshold value is set based on a state of a topsoil of the work area (F).

10. The automatic traveling method according to any one of claims 1 to 9, further comprising:

    detecting the deviation of the work vehicle traveling automatically; and
    determining whether the detected deviation exceeds the threshold value.

11. An automatic traveling system (1) comprising:

    a travel processing unit (11) that causes a work vehicle (1) to automatically travel according to a target route (R) in a work area (F) where crops (V) are planted;
    a setting processing unit (114) that changeably sets, with respect to the target route (R), a threshold value of a deviation including at least one of a position deviation and an orientation deviation of the work vehicle (1) ; and
    a correction processing unit (113) that executes a correction operation for correcting the deviation of the work vehicle (1) if the deviation exceeds the threshold value, to avoid collision against the crops (V) during automatic travelling.

12. An automatic traveling program for causing one or more processors to execute:

    causing a work vehicle (1) to automatically travel according to a target route in a work area (F) where crops (V) are planted;
    changeably setting, with respect to the target route (R), a threshold value of a deviation including at least one of a position deviation and an orientation deviation of the work vehicle (1); and
    causing the work vehicle (1) to execute a correction operation for correcting the deviation if the deviation exceeds the threshold value, to avoid collision against the crops (V) during automatic travelling.

**Patentansprüche**

1. Automatisches Fahrverfahren, umfassend:

    Bewirken, dass ein Arbeitsfahrzeug (10) automatisch gemäß einer Zielroute (R) in einem Arbeitsbereich (F) fährt, wo Kulturpflanzen (V) angebaut werden;
    veränderbares Einstellen, in Bezug auf die Zielroute (R), eines Schwellenwerts einer Abweichung, die mindestens eine von einer Positionsabweichung und einer Ausrichtungsabweichung des Arbeitsfahrzeugs (10) umfasst; und
    Veranlassen des Arbeitsfahrzeugs (10), einen Korrekturvorgang zum Korrigieren der Abweichung auszuführen, wenn die Abweichung den Schwellenwert überschreitet, um während des automatischen Fahrens Kollision gegen die Kulturpflanzen (V) zu vermeiden.

2. Automatisches Fahrverfahren nach Anspruch 1, wobei der Schwellenwert basierend auf Fahrverlaufsinformationen des Arbeitsfahrzeugs geändert wird.

3. Automatisches Fahrverfahren nach Anspruch 2, wobei die Zielroute (R) eine Vielzahl von Arbeitsrouten (R1) umfasst, die in einer Vielzahl von Reihen angeordnet sind, und
der Schwellenwert für jede der Vielzahl von Arbeitsrouten basierend auf der Abweichung geändert wird, die jede der Vielzahl von Arbeitsrouten (R1) betrifft und die in den Fahrverlaufsinformationen enthalten ist.

4. Automatisches Fahrverfahren nach Anspruch 3, wobei die Zielroute (R) eine erste Arbeitsroute und eine zweite Arbeitsroute umfasst, und

der Schwellenwert der ersten Arbeitsroute und der Schwellenwert der zweiten Arbeitsroute auf Werte geändert werden, die sich voneinander unterscheiden.

5. Automatisches Fahrverfahren nach Anspruch 3 oder 4, wobei der Schwellenwert der Abweichung in Bezug auf eine Auffahrposition, an der das Arbeitsfahrzeug (10) auf die Arbeitsroute (R) auffährt, geändert wird.

6. Automatisches Fahrverfahren nach Anspruch 5, wobei der Schwellenwert der Abweichung in Bezug auf die Auffahrposition der Arbeitsroute (R) auf einen Wert geändert wird, der kleiner als der Schwellenwert der Abweichung innerhalb der Arbeitsroute (R) ist.

7. Automatisches Fahrverfahren nach Anspruch 1, wobei der Schwellenwert basierend auf Steigungsinformationen eingestellt wird, die eine Steigung des Arbeitsbereichs (F) angeben.

8. Automatisches Fahrverfahren nach Anspruch 7, wobei die Zielroute eine Vielzahl von Arbeitsrouten umfasst, die in einer Vielzahl von Reihen angeordnet sind, und
die Steigung basierend auf Höheninformationen berechnet wird, die eine Höhe eines Endpunkts der Arbeitsroute angeben.

9. Automatisches Fahrverfahren nach Anspruch 1, wobei der Schwellenwert basierend auf einem Zustand eines Mutterbodens des Arbeitsbereichs (F) eingestellt wird.

10. Automatisches Fahrverfahren nach einem der Ansprüche 1 bis 9, ferner umfassend:

Erkennen der Abweichung des automatisch fahrenden Arbeitsfahrzeugs; und
Bestimmen, ob die erkannte Abweichung den Schwellenwert überschreitet.

11. Automatisches Fahrsystem (1) umfassend:

eine Fahrverarbeitungseinheit (11), die ein Arbeitsfahrzeug (1) veranlasst, automatisch gemäß einer Zielroute (R) in einem Arbeitsbereich (F) zu fahren, wo Kulturpflanzen (V) angebaut werden;
eine Einstellungsverarbeitungseinheit (114), die in Bezug auf die Zielroute (R) einen Schwellenwert einer Abweichung veränderbar einstellt, die mindestens eines von einer Positionsabweichung und einer Ausrichtungsabweichung des Arbeitsfahrzeugs (1) umfasst; und
eine Korrekturverarbeitungseinheit (113), die, wenn die Abweichung den Schwellenwert überschreitet, einen Korrekturvorgang zum Korrigieren der Abweichung des Arbeitsfahrzeugs (1) ausführt, um während des automatischen Fahrens Kollision gegen die Kulturpflanzen (V) zu vermeiden.

12. Automatisches Fahrprogramm zum Veranlassen eines oder mehrerer Prozessoren zum Ausführen von:

Veranlassen eines Arbeitsfahrzeugs (1), automatisch gemäß einer Zielroute in einem Arbeitsbereich (F) zu fahren, wo Kulturpflanzen (V) angebaut werden;
veränderbarem Einstellen, in Bezug auf die Zielroute (R), eines Schwellenwerts einer Abweichung, die mindestens eines von einer Positionsabweichung und einer Ausrichtungsabweichung des Arbeitsfahrzeugs (1) umfasst; und
Veranlassen, dass das Arbeitsfahrzeug (1) einen Korrekturvorgang zum Korrigieren der Abweichung ausführt, wenn die Abweichung den Schwellenwert überschreitet, um während des automatischen Fahrens Kollision gegen die Kulturpflanzen (V) zu vermeiden.

**Revendications**

1. Procédé de déplacement automatique, comprenant les étapes suivantes :

amener un véhicule de travail (10) à se déplacer automatiquement selon un itinéraire cible (R) dans une zone de travail (F) où des cultures (V) sont plantées ;
fixer de manière modifiable, par rapport à l'itinéraire cible (R), une valeur seuil d'un écart comportant au moins l'un parmi un écart de position et un écart d'orientation du véhicule de travail (10) ; et
amener le véhicule de travail (10) à exécuter une opération de correction pour corriger l'écart si l'écart dépasse la valeur seuil, afin d'éviter une collision avec les cultures (V) pendant le déplacement automatique.

2. Procédé de déplacement automatique selon la revendication 1, dans lequel la valeur seuil est modifiée sur la base d'informations d'historique de déplacement du véhicule de travail.

3. Procédé de déplacement automatique selon la revendication 2, dans lequel l'itinéraire cible (R) comporte une pluralité d'itinéraires de travail (R1) agencés en une pluralité de rangées, et
la valeur seuil est modifiée pour chacun de la pluralité d'itinéraires de travail sur la base de l'écart relatif à chacun de la pluralité d'itinéraires de travail (R1) qui est inclus dans les informations d'historique de déplacement.

4. Procédé de déplacement automatique selon la revendication 3, dans lequel l'itinéraire cible (R) comporte un premier itinéraire de travail et un deuxième itinéraire de travail, et
la valeur seuil du premier itinéraire de travail et la valeur seuil du deuxième itinéraire de travail passent à des valeurs différentes l'une de l'autre.

5. Procédé de déplacement automatique selon la revendication 3 ou 4, dans lequel la valeur seuil de l'écart par rapport à une position d'entrée qui est entrée par le véhicule de travail (10) dans l'itinéraire de travail (R) est modifiée.

6. Procédé de déplacement automatique selon la revendication 5, dans lequel la valeur seuil de l'écart par rapport à la position d'entrée de l'itinéraire de travail (R) passe à une valeur inférieure à la valeur seuil de l'écart au sein de l'itinéraire de travail (R).

7. Procédé de déplacement automatique selon la revendication 1, dans lequel la valeur seuil est fixée sur la base d'informations de pente indiquant une pente de la zone de travail (F).

8. Procédé de déplacement automatique selon la revendication 7, dans lequel l'itinéraire cible comporte une pluralité d'itinéraires de travail agencés en une pluralité de rangées, et
la pente est calculée sur la base d'informations d'altitude indiquant une altitude d'un point d'extrémité de l'itinéraire de travail.

9. Procédé de déplacement automatique selon la revendication 1, dans lequel la valeur seuil est fixée sur la base d'un état d'une couche arable de la zone de travail (F).

10. Procédé de déplacement automatique selon l'une des revendications 1 à 9, comprenant en outre les étapes suivantes :

    détecter l'écart du véhicule de travail se déplaçant automatiquement ; et
    déterminer si l'écart détecté dépasse la valeur seuil.

11. Système de déplacement automatique (1) comprenant :

    une unité de traitement de déplacement (11) qui amène un véhicule de travail (1) à se déplacer automatiquement selon un itinéraire cible (R) dans une zone de travail (F) où des cultures (V) sont plantées ;
    une unité de traitement de réglage (114) qui fixe de manière modifiable, par rapport à l'itinéraire cible (R), une valeur seuil d'un écart comportant au moins l'un parmi un écart de position et un écart d'orientation du véhicule de travail (1) ; et
    une unité de traitement de correction (113) qui exécute une opération de correction pour corriger l'écart du véhicule de travail (1) si l'écart dépasse la valeur seuil, afin d'éviter une collision avec les cultures (V) pendant le déplacement automatique.

12. Programme de déplacement automatique pour amener un ou plusieurs processeurs à exécuter les étapes suivantes :

    amener un véhicule de travail (1) à se déplacer automatiquement selon un itinéraire cible dans une zone de travail (F) où des cultures (V) sont plantées ;
    fixer de manière modifiable, par rapport à l'itinéraire cible (R), une valeur seuil d'un écart comportant au moins l'un parmi un écart de position et un écart d'orientation du véhicule de travail (1) ; et
    amener le véhicule de travail (1) à exécuter une opération de correction pour corriger l'écart si l'écart dépasse la valeur seuil, afin d'éviter une collision avec les cultures (V) pendant le déplacement automatique.

# FIG. 1

# FIG. 2

1

**20** — OPERATION TERMINAL

**21** — CONTROL UNIT

**211** — | SETTING PROCESSING UNIT |

**212** — | ROUTE GENERATION PROCESSING UNIT |

**213** — | OUTPUT PROCESSING UNIT |

**22** — STORAGE UNIT

**23** — OPERATION DISPLAY UNIT

**24** — COMMUNICATION UNIT

N1

**10** — WORK VEHICLE

**11** — VEHICLE CONTROL DEVICE

**111** — TRAVEL PROCESSING UNIT

**112** — DETECTION PROCESSING UNIT

**113** — CORRECTION PROCESSING UNIT

**114** — SETTING PROCESSING UNIT

**12** — STORAGE UNIT

**13** — TRAVEL DEVICE

**14** — SPRAY DEVICE

**15** — COMMUNICATION UNIT

**16** — POSITIONING DEVICE

**161** — POSITIONING CONTROL UNIT

**162** — STORAGE UNIT

**163** — COMMUNICATION UNIT

**164** — ANTENNA

**17** — OBSTACLE DETECTION DEVICE

# FIG. 3

# FIG. 4A

# FIG. 4B

# FIG. 4C

# FIG. 5

# FIG. 6

# FIG. 7A

# FIG. 7B

# FIG. 8

# FIG. 9

# FIG. 10A

F1

| CROP ROW Vr | MAXIMUM CHANGE AMOUNT Pm | ALLOWABLE POSITION DEVIATION LEVEL Lp |
|---|---|---|
| Vr1 | Pm1 | Lp1 |
| Vr2 | Pm2 | Lp2 |
| Vr3 | Pm3 | Lp3 |
| Vr4 | Pm4 | Lp4 |
| Vr5 | Pm5 | Lp5 |
| ... | ... | ... |
| Vr11 | Pm11 | Lp11 |

# FIG. 10B

F2

| CROP ROW Vr | MAXIMUM CHANGE AMOUNT Dm | ALLOWABLE ORIENTATION DEVIATION LEVEL Ld |
|---|---|---|
| Vr1 | Dm1 | Ld1 |
| Vr2 | Dm2 | Ld2 |
| Vr3 | Dm3 | Ld3 |
| Vr4 | Dm4 | Ld4 |
| Vr5 | Dm5 | Lp5 |
| ... | ... | ... |
| Vr11 | Dm11 | Ld11 |

# FIG. 11A

F3

| ALLOWABLE POSITION DEVIATION LEVEL Lp | POSITION OFFSET AMOUNT Op |
|---|---|
| Lp1 | Op1 |
| Lp2 | Op2 |
| Lp3 | Op3 |
| Lp4 | Op4 |
| Lp5 | Op5 |
| ... | ... |
| Lp11 | Op11 |

# FIG. 11B

F4

| ALLOWABLE ORIENTATION DEVIATION LEVEL Ld | ORIENTATION OFFSET AMOUNT Od |
|---|---|
| Ld1 | Od1 |
| Ld2 | Od2 |
| Ld3 | Od3 |
| Ld4 | Od4 |
| Lp5 | Od5 |
| ... | ... |
| Ld11 | Od11 |

# FIG. 12

START

SET INITIAL VALUE OF DEVIATION — S1

START AUTOMATIC TRAVEL — S2

RECORD MAXIMUM CHANGE AMOUNTS Pm, Dm — S3

CALCULATE ALLOWABLE DEVIATION LEVELS Lp, Ld — S4

DETERMINE OFFSET AMOUNTS Op, Od — S5

SET ALLOWABLE VALUE — S6

END

# FIG. 13

```
                    ┌─────────────┐
                    │    START    │
                    └─────────────┘
                           │
        ┌──────────────────▼
        │              ╱╲           S11
        │            ╱    ╲
   No   │      ╱ IS WORK ╲
  ◄─────┤    ╱ START INSTRUCTION ╲
        │    ╲   ACQUIRED?  ╱
        │      ╲          ╱
                  ╲    ╱
                    ╲╱
                     │ Yes
                     ▼
        ┌───────────────────────────┐    S12
        │   START AUTOMATIC TRAVEL   │
        └───────────────────────────┘
                     │
  ►─────────────────▼◄──────────────────────────┐
        │                                        │
        ▼                                        │
      ╱╲              S13    Yes                 │
    ╱    ╲                                       │
  ╱    DOES      ╲──────────────┐                │
╱ DEVIATION EXCEED ALLOWABLE ╲  │                │
╲      VALUE?      ╱             ▼                │
  ╲            ╱         ┌──────────────────┐    │  S131
    ╲      ╱             │ EXECUTE CORRECTION│    │
      ╲  ╱              │    OPERATION      │────┘
       │ No             └──────────────────┘
       ▼
      ╱╲              S14
    ╱    ╲
  ╱        ╲
  No ◄  IS WORK ENDED?
  ╲        ╱
    ╲    ╱
      ╲╱
       │ Yes
       ▼
  ┌─────────┐
  │   END   │
  └─────────┘
```

33

# FIG. 14

# FIG. 15

# FIG. 16

**EP 4 099 124 B1**

**REFERENCES CITED IN THE DESCRIPTION**

**Patent documents cited in the description**

- CN 112356844 A
- JP 2021000021 A